# EUROPÄISCHE PATENTSCHRIFT

(11) **EP 2 058 363 B1**
(45) Veröffentlichungstag und Bekanntmachung des Hinweises auf die Patenterteilung: **01.02.2012**
(21) Anmeldenummer: 08018620.8
(22) Anmeldetag: 24.10.2008
(51) Int. Cl.: C08K 5/092, C08K 5/11, C08K 5/42, C08L 69/00

(54) **Verfahren zur Herstellung von Polycarbonat nach dem Schmelzeumesterungsverfahren**
Method of manufacturing polycarbonate using the melting ester interchange method
Procédé destiné à la fabrication de polycarbonate selon le procédé d'estérification de la matière en fusion

(30) Priorität: 07.11.2007 DE 102007052968
(43) Veröffentlichungstag der Anmeldung: 13.05.2009
(73) Patentinhaber: Bayer MaterialScience AG, 51368 Leverkusen (DE)
(72) Erfinder: Haese, Wilfried Dr., 51519 Odenthal (DE); Meyer, Alexander Dr., 40489 Düsseldorf (DE)

(56) Entgegenhaltungen:
- EP-A- 0 922 728
- US-A- 5 254 614
- US-A1- 2005 113 534

## Beschreibung

Gegenstand der Erfindung ist ein Verfahren zur Herstellung von Polycarbonat mit niedriger elektrostatischer Aufladung nach dem Schmelzeumesterungsverfahren.

Optische Datenaufzeichnungsmaterialien werden zunehmend als variables Aufzeichnungs-und/oder Archivierungsmedium für große Datenmengen verwendet. Beispiele für diese Art von optischen Datenspeichern sind CD, Super- Audio-CD, CD-R, CD-RW, DVD, DVD-R, DVD+R, DVD-RW, DVD+RW, HD-DVD und BD.

Transparente thermoplastische Kunststoffe wie zum Beispiel Polycarbonat, Polymethylmethacrylat und chemische Modifikationen hiervon werden typischerweise für optische Speichermedien eingesetzt. Polycarbonat als Substratmaterial eignet sich insbesondere für einmal beschreibbare und mehrfach auslesbare sowie auch für mehrfach beschreibbare optische Disks sowie für die Herstellung von Formteilen aus dem Bereich des Automotive Glazings, wie z.B. von Streulichtscheiben. Dieser thermoplastische Kunststoff verfügt über eine ausgezeichnete mechanische Stabilität, ist wenig anfällig gegenüber Dimensionsveränderungen und zeichnet sich durch eine hohe Transparenz und Schlagzähigkeit aus.

Gemäß DE-A 2 119 799 kann die Herstellung von Polycarbonaten unter Beteiligung phenolischer Endgruppen nach dem Phasengrenzflächenverfahren wie auch dem Verfahren in homogener Phase erfolgen.

Ein weiteres industriell genutztes Verfahren zur Herstellung von Polycarbonat ist das Schmelzeumesterungsverfahren. Polycarbonat hergestellt nach diesem Verfahren kann grundsätzlich für die Herstellung von optischen Datenspeichern der oben beschriebenen Formate wie z.B. für Compact Disks (CD) oder Digital Versatile Disks (DVD) verwendet werden.

Dieses Verfahren hat allerdings bisher den Nachteil, dass es Polycarbonate liefert, welche nach Verarbeitung zu Spritzgusskörpern die Eigenschaft haben, hohe elektrische Felder an der Oberfläche der Spritzgussartikel aufzubauen. So bauen z.B. Disks für optische Datenspeicher aus diesem Polycarbonat während ihrer Herstellung im Spritzgussverfahren ein hohes elektrisches Feld auf. Diese hohe Feldstärke auf dem Substrat führt während der Herstellung der optischen Datenspeicher, z.B. zur Anziehung von Staub aus der Umgebung bzw. zum Verkleben der Spritzgussartikel, beispielsweise der Disks untereinander, was die Qualität der fertigen Spritzgussartikel mindert und das Spritzgussverfahren zudem erschwert.

Des Weiteren führt das hohe elektrische Feld auf den Disks (für optische Datenträger) zu einer mangelnden Benetzbarkeit vor allem mit unpolaren Medien, wie z.B. einem unpolaren Farbstoff oder einem Farbstoffauftrag aus Lösungsmitteln, wie z.B. Dibutylether, Ethylcyclohexan, Tetrafluorpropanol, Cyclohexan, Methylcyclohexan oder Octafluorpropanol. So verursacht eine hohe elektrisches Feld an der Oberfläche des Substrates während des Farbstoffauftrags bei beschreibbaren Datenspeichern zum Beispiel eine unregelmäßige und unvollständige Beschichtung mit Farbstoff und führt damit zu Defekten in der Informationsschicht.

Im Falle eines optischen Datenspeichers bei dem ein beschreibbarer Farbstoff auf der Oberfläche in einem Spin Coating Prozess aufgetragen wird, ist daher eine niedrige absolute elektrische Feldstärke erforderlich, um die gleichmäßige Auftragung der beschreibbaren Schicht zu gewährleisten und einen störungsfreien Produktionsprozess sicherzustellen.

Die elektrostatische Aufladung eines Substratmaterials führt zu einem elektrischen Feld welches durch Messung in einem bestimmten Abstand zur Substratoberfläche quantifiziert werden kann.

Ein weiterer Nachteil eines solchen hohen elektrischen Feldes ist aufgrund der oben beschriebenen Fakten zudem in Ausbeuteverlusten hinsichtlich des Substratmaterials zu sehen. Dies führt zu Produktionsausfällen und verursacht demnach entsprechende Zusatzkosten.

Das elektrische Feld, welches im Laufe des Spritzgussprozesses auf den jeweiligen Spritzgussteilen entsteht, ist während des Produktionsprozesses nicht konstant, sondern folgt einem bestimmten zeitlichen Verlauf. So zeigt sich, dass sich die Feldstärke auf den jeweiligen Disks nach Beginn des Spritzgussprozesses (Einsetzen einer neuen Matrize vorausgesetzt) zunächst verändert und erst nach einem gewissen Zeitraum einen stabilen Wert (Plateau) erreicht oder nur noch geringfügig weiter ansteigt. Dies ist ein wichtiges Kriterium für die Performance des Spritzgussteils im nachfolgenden Produktionsschritt, in welchem z.B. der Farbstoff auf das Substrat aufgetragen wird. Die Aufladung von Spritzgusskörpern hergestellt aus Polycarbonat nach dem Schmelzeumesterungsprozess unterscheidet sich von Spritzgusskörpern hergestellt aus Polycarbonat nach dem Phasengrenzflächenverfahren essentiell. Der Startwert der Feldstärke im Falle von Polycarbonat nach dem Schmelzeumesterungsprozess bei Beginn des Spritzgussprozesses liegt meist stark im negativen Bereich verglichen mit Polycarbonat hergestellt nach dem Phasengrenzflächenverfahren. Der Plateauwert, welcher sich nach einer gewissen Laufzeit einstellt, wie z.B. nach 2 Stunden eines kontinuierlichen Spritzgussprozesses, verbleibt im Gegensatz zu Polycarbonat, hergestellt nach dem Phasengrenzflächenverfahren, generell deutlich im negativen Bereich (negative Feldstärke).

Um das Problem eines hohen elektrostatischen Feldes zu lösen, wurden mehrere Ansätze verfolgt. Im Allgemeinen werden dem Substratmaterial Antistatika als Additive zugesetzt. Solche mit Antistatika versetzten Polycarbonat-Zusammensetzungen werden z.B. in JP-A 62 207 358 beschrieben, worin Polyethylen- bzw. Polypropylenderivate als Additive eingesetzt werden. Hier werden dem Polycarbonat u.a. Phosphorsäurederivate als Antistatika zugesetzt. EP-A 922 728 beschreibt verschiedene Antistatika wie Polyalkylenglykolderivate, ethoxyliertes Sorbitanmonolaurat, Polysiloxanderivate, Phosphinoxide sowie Distearylhydroxyamin, welche einzeln oder als Mischungen eingesetzt werden können. Die japanische Anmeldung JP-A 62 207 358 beschreibt Ester der phosphorigen Säure als antistatisch wirksame Additive. In US 5,668,202 werden Sulfonsäurederivate als Additive beschrieben.

In US 6,262,218 und US 6,022,943 wird der Einsatz von Phenylchlorformiat beschrieben, um den Endgruppengehalt im Schmelze-Polycarbonat (Polycarbonat hergestellt nach dem Schmelzeumesterungsverfahren) zu erhöhen. Darin wird postuliert, dass sich ein Endgruppengehalt von mehr als 90 % positiv auf die elektrostatischen Eigenschaften auswirken soll. In WO-A 00/50 488 wird 3,5-Di-tert-butylphenol als Kettenabbrecher im Phasengrenzflächenverfahren eingesetzt. Dieser Kettenabbrecher führt zu einer niedrigeren statischen Aufladung des entsprechenden Substratmaterials verglichen mit herkömmlichen Kettenabbrechern. In EP-A 1 304 358 wird der Einsatz kurzer Oligomere wie z.B. Bisphenol A-bis-(4-tert.-butylphenylcarbonat) als Additive in Polycarbonat aus dem Schmelzeumesterungsprozess beschrieben.

Die beschriebenen Additive können sich jedoch nachteilig auf die Eigenschaften des Substratmaterials auswirken, da sie bei hohen Temperaturen dazu neigen, aus dem Material auszutreten und dadurch zu Belagsbildung oder mangelhafter Abformung führen können. Weiterhin kann auch der Gehalt an Oligomeren im Polycarbonat zu einem schlechteren mechanischen Eigenschaftsniveau und zu einer Absenkung der Glasübergangstemperatur führen. Ferner können diese Additive als Zusätze Nebenreaktionen verursachen. Dadurch kann die thermische Stabilität des Basismaterials herabgesetzt werden. Das nachträgliche "Endcapping" von Polycarbonat, welches aus dem U-mesterungsprozess gewonnen wurde, ist aufwendig. Die dazu notwendigen Substanzen müssen hergestellt werden, was mit zuzsätzlichen Kosten und einem zusätzlichen Verfahrensschritt für das nachträgliche "Endcapping" verbunden ist.

Des Weiteren ist bekannt, verschiedene Säuren oder Säurederivate Polycarbonaten als Additive zuzusetzen. So wird beispielsweise in JP-A 07-247351 beschrieben, bei der Herstellung von Polycarbonaten aliphatische Hydroxycarbonsäuren als chelatisierende Komponente des Katalysatorsystems einzusetzen. In US-A 2005/0113534 zur Stabilisierung eines Polycarbonat/Polyesterblends bei der Compoundierung werden unter anderem Hydroxycarbonsäuren eingesetzt. In US-A 2005/0171323 werden Copolycarbonate beschrieben, die spezielle Strukturen von Chinonderivaten aufweisen. Zur Stabilisierung dieser Copolycarbonate werden während der Polykondensation u.a.

Hydroxycarbonsäuren als Antioxidatien zugesetzt. EP-A 435 124 beschreibt die Zugabe schwacher Säuren zur Neutralisation der basischen Katalysatoren zum fertigen Polycarbonat. EP-A 460 646 beschreibt ebenfalls die Zugabe von aliphatischen Carbonsäuren zum fertigen Polycarbonatpulver oder Granulat, insbesondere zu solchem hergestellt nach dem Phasengrenzflächenverfahren, zu derartigen Stabilisierungszwecken. Bei keiner der vorangehend beschriebenen Additivierungen wurde jedoch ein günstiger Effekt auf die elektrostatische Aufladung resultierender Produkte beobachtet.

In DE-A 10 2004 061 754, DE-A 10 2004 061 715, US-A 2006/135736, US-A 2006/135735 sowie in US-A 2006/134366 werden Materialien beschrieben, die besonders für die Herstellung ladungsarmer Spritzgusskörper geeignet sind. Dabei handelt es sich jedoch ausschließlich um solche Polycarbonate, die nach dem Phasengrenzflächenverfahren hergestellt wurden. Die beschriebenen Maßnahmen sind beim Schmelzeumesterungsverfahren wirkungslos.

Um eine gute Beschichtbarkeit von optischen Datenspeichern im Produktionsprozess zu gewährleisten, werden häufig sogenannte Ionisatoren eingesetzt, welche einen ionisierten Luftstrom über die Disks leiten. Der Einsatz von Ionisatoren verteuert jedoch den Produktionsprozess, so dass für ein wirtschaftliches Verfahren die Anzahl der zu verwendenden Ionisatoren auf ein Minimum reduziert sein sollte.

Es wurde zudem ferner gefunden, dass für die Beschichtbarkeit eines Spritzgusskörpers nicht nur die Höhe des elektrischen Feldes relevant ist, sondern auch die Ladungshomogenität auf dem Spritzgusskörper - z.B. eine optische Disk - eine wichtige Rolle spielt. So kann z.B. an der gesamten Disk insgesamt eine niedrige mittlere elektrische Feldstärke gemessen werden. Allerdings kann an einigen Oberflächensektoren eine hohe positive elektrische Feldstärke, an anderen eine sehr niedrige Feldstärke vorhanden sein. Diese Ladungsunterschiede führen zu einer mangelnden Benetzbarkeit, obwohl das gemessene mittlere Feld akzeptable Werte aufweisen kann. Aus diesem Grund ist nicht nur der absolute mittlere Wert der elektrischen Feldstärke sondern auch die Schwankungen der Feldstärke (Feldstärkenvariation) gemessen auf einem bestimmten Radius des Spritzgusskörpers für eine optimale Benetzbarkeit von großem Interesse.

Somit bestand weiterhin Bedarf nach einem Verfahren zur Herstellung von Polycarbonat nach dem Schmelzeumesterungsverfahren, welches für die Verarbeitung zu Formkörpern bzw. Extrudaten mit niedriger elektrostatischer Aufladung geeignet ist. Ferner bestand neben der Anforderung einer möglichst niedrigen mittleren elektrischen Feldstärke (Betrag) an entsprechenden Formteilen der Anspruch möglichst geringer Feldstärkenvariation an der Substratoberfläche.

Es bestand daher die Aufgabe, ein Schmelzeumesterungsverfahren zur Verstellung von Polycarbonat bereitzustellen, welches nach Verarbeitung zu einem Formkörper bzw. Extrudat den Anforderungen einer möglichst niedrigen Aufladung an der Substratoberfläche in Kombination mit einer geringen Ladungsvariation genügt und die vorangehend beschriebenen Nachteile vermeidet.

Diese Aufgabe wird überraschend dadurch gelöst, dass in einem mehrstufigen Schmelzeumesterungsverfahren der Schmelze vor der letzten Reaktionsstufe wenigstens ein Inhibitor und in oder nach der letzten Reaktionsstufe eine oder mehrere aliphatische Hydroxydicarbonsäure(n) und/oder Hydroxypolycarbonsäure(n) oder deren Derivat(e) zugesetzt werden. Polycarbonate hergestellt gemäß erfindungsgemäßem Verfahren zeigen die vorangehend aufgeführten Nachteile nicht und eigenen sich hervorragend für die Verarbeitung zu Formkörpern bzw. Extrudaten mit niedriger und homogener elektrostatischer Aufladung.

Gegenstand der vorliegenden Erfmdung ist daher ein Verfahren zur Herstellung von Polycarbonat nach dem Schmelzeumesterungsverfahren, wobei wenigstens eine Dihydroxyarylverbindung mit wenigstens einem Diarylcarbonat unter Verwendung wenigstens eines Katalysators in einem mehrstufigen Prozess umgesetzt werden, dadurch gekennzeichnet, dass der Schmelze vor der letzten Reaktionsstufe wenigstens ein Inhibitor zugesetzt wird und in oder nach der letzten Reaktionsstufe eine oder mehrere aliphatische Hydroxydicarbonsäure(n) und/oder Hydroxypolycarbonsäure(n) oder deren Derivat(e) zugesetzt werden.

Mit dem Polycarbonat hergestellt gemäß diesem erfindungsgemäßen Verfahren gelingt es, Spritzgusskörper, wie z.B. Scheiben für optische Datenträger, mit Werten für die mittlere elektrische Feldstärke von -20 bis + 20 kV/m in Kombination mit einer geringen Feldstärkenvariation von kleiner 15 kV/m herzustellen.

Das erfindungsgemäße Verfahren erfolgt nach dem Schmelzeumesterungsverfahren. Die Herstellung von aromatischen Oligo- bzw. Polycarbonaten nach dem Schmelzumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964), S. 44 - 51. sowie in der DE-C 10 31 512, US-A 3,022,272, US-A 5,340,905 und US-A 5,399,659 beschrieben.

Gemäß diesem Verfahren werden aromatische Dihydroxyverbindungen, mit Kohlensäurediestern unter Zuhilfenahme von geeigneten Katalysatoren und gegebenenfalls weiteren Zusatzstoffen in der Schmelze umgeestert.

Das Verfahren erfolgt mehrstufig, in der Regel in hintereinander geschalteten Reaktoren, in denen stufenweise das Molekulargewicht und damit die Viskosität des Polycarbonates erhöht wird.

Zur Durchführung des erfindungsgemäßen Verfahrens kann beispielsweise eine Anlagenkonzeption, wie sie in WO-A 02/077 067 dargestellt ist, verwendet werden. Dabei wird die Polycarbonatsynthese durch Umesterung von Diarylcarbonaten mit Dihydroxyarylverbindungen in Gegenwart von quartären Oniumverbindungen durchgeführt, wobei in mehreren Verdampferstufen bei schrittweise steigenden Temperaturen und schrittweise fallenden Drücken ein Oligocarbonat hergestellt wird, welches in einem oder zwei hintereinandergeschalteten Korbreaktoren bei weiter steigenden Temperaturen und fallenden Drücken zum Polycarbonat aufkondensiert wird.

Für das erfindungsgemäße Verfahren geeignete Dihydroxyarylverbindungen solche der allgemeinen Formel (I),

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,1-Bis-(4-hydroxyphenyl)-3,3,5-trimethyl-cyclohexan, 1,3-Bis-[2-(4-hydroxyphenyl)-2-propyl]-benzol, 1,1'-Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1 -Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Copolycarbonaten verwendet werden.

Die Dihydroxyarylverbindungen können auch mit Restgehalten der Monohydroxyarylverbindungen, aus denen sie hergestellt wurden, bzw. die niedermolekularen Oligocarbonate mit Restgehalten der Monohydroxyarylverbindungen, die bei der Herstellung der Oligomeren abgespalten wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Die für die Umsetzung mit den Dihydroxyarylverbindungen geeigneten Diarylcarbonate sind solche der allgemeinen Formel (II) 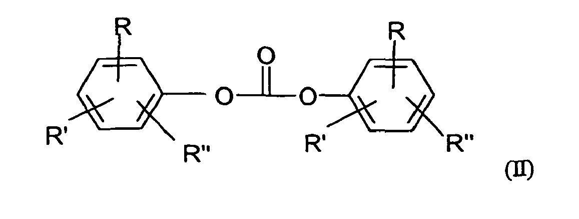 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R''' bedeuten kann, wobei R''' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

Zur Steuerung bzw. Veränderung der Endgruppen können zusätzlich eine oder mehrere Monohydroxyarylverbindung(en) eingesetzt werden, die nicht zur Herstellung des oder der verwendeten Diarylcarbonat(e) verwendet wurde(n). Dabei kann es sich um solche der allgemeinen Formel (III) handeln, 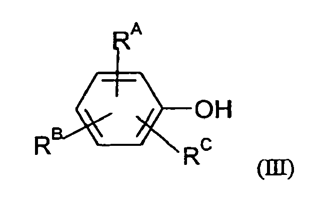 wobei
- R^{A}: für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Die Monohydroxyarylverbindung(en) sind dabei so zu wählen, dass deren Siedepunkt über dem der Monohydroxyarylverbindung liegt, die zur Herstellung des verwendeten Diarylcarbonats eingesetzt wurde. Die Monohydroxyarylverbindung kann zu jedem Zeitpunkt im Reaktionsverlauf zugegeben werden. Sie wird bevorzugt zu Beginn der Reaktion zugegeben. Der Anteil an freier Monohydroxyarylverbindung kann 0,2 bis 20 Mol-%, bevorzugt 0,4 bis 10 Mol-% bezogen auf die Dihydroxyarylverbindung betragen.

Es ist zudem möglich, die Endgruppen der resultierenden Polycarbonate auch durch Zugabe wenigstens eines zusätzlichen Diarylcarbonats, dessen Basis-Monohydroxyarylverbindung einen höheren Siedepunkt aufweist als die Basis-Monohydroxyarylverbindung des hauptsächlich eingesetzten Diarylcarbonates, zu verändern. Auch hier kann das zusätzliche Diarylcarbonat zu jedem Zeitpunkt im Reaktionsverlauf zugegeben werden. Es wird bevorzugt zu Beginn der Reaktion zugegeben. Der Anteil des Diarylcarbonates mit der höher siedenden Basis-Monohydroxyarylverbindung an der gesamt eingesetzten Diarylcarbonatmenge kann 1 bis 40 Mol-%, bevorzugt 1 bis 20 Mol-% und besonders bevorzugt 1 bis 10 Mol-% betragen.

Als Katalysatoren können im Schmelzumesterungsverfahren zur Herstellung von Polycarbonaten die in der Literatur bekannten basischen Katalysatoren wie beispielsweise Alkali- und Erdalkalihydroxyde und -oxyde und/oder Oniumsalze, wie z.B. Ammonium- oder Phosphoniumsalze, eingesetzt werden. Bevorzugt werden bei der Synthese Oniumsalze, besonders bevorzugt Phosphoniumsalze eingesetzt. Solche Phosphoniumsalze sind beispielsweise solche der allgemeinen Formel (IV) 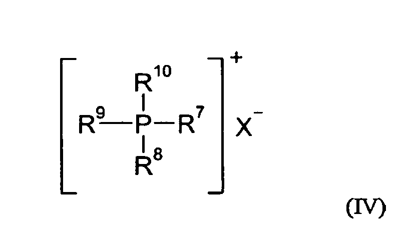 worin
- R⁷⁻¹⁰: für gleiche oder verschiedene gegebenenfalls substituierte C₁-C₁₀-Alkyl-, C₆-C₁₄-Aryl-, C₇-C₁₅-Arylalkyl- oder C₅-C₆-Cycloalkylreste, bevorzugt für Methyl oder C₆-C₁₄-Aryl, besonders bevorzugt Methyl oder Phenyl stehen und
- X⁻: für ein Anion ausgewählt aus der Gruppe Hydroxyd, Sulfat, Hydrogensulfat, Hydrogen-carbonat, Carbonat, Halogenid, bevorzugt Chlorid, und Alkylat oder Arylat der Formel-OR" stehen, wobei R¹¹ für einen gegebenenfalls substituierten C₆-C₁₄-Aryl-, C₇-C₁₅-Arylalkyl- oder C₅-C₆-Cycloalkylrest, C₁-C₂₀-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von 10⁻⁸ bis 10⁻³ mol, besonders bevorzugt in Mengen von 10⁻⁷ bis 10⁻⁴ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte C₁-C₁₀-Alkoxyde und C₆-C₁₄-Aryloxyde von Lithium, Natrium und Kalium, vorzugsweise Hydroxyde, gegebenenfalls substituierte C₁-C₁₀-Alkoxyde oder C₆-C₁₄-Aryloxyde von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionspektroskopie, 1 bis 500 ppb, vorzugsweise 5 bis 300 ppb und am meisten bevorzugt 5 bis 200 ppb, bezogen auf zu bildendes Polycarbonat. In bevorzugten Ausführungsformen des erfindungsgemäßen Verfahrens werden allerdings keine Alkalisalze verwendet.

Im Rahmen der vorliegenden Erfindung sind unter ppb und ppm - soweit nichts anderes angegeben - Gewichtsteile zu verstehen.

Die alkalisch wirkenden Salze von Alkalimetallen und Erdalkalimetallen können schon bei der Herstellung der Oligocarbonate, das heißt zu Beginn der Synthese oder in einem späteren Verfahrensschritt, zugemischt werden, um unerwünschte Nebenreaktionen zu unterdrücken. Die Gesamtmenge an Katalysator kann auch in mehreren Schritten dem Verfahren zugegeben werden.

Weiter besteht auch die Möglichkeit, zusätzlich zu den vorangehend bereits genannten Katalysatoren und Katalysatormengen ergänzende Mengen Oniumkatalysatoren vor der Polykondensation zuzugeben. Für den Fall, dass es sich bereits bei oben genanntem Katalysator um einen Oniumkatalysator handelt, kann es sich bei dem in ergänzenden Mengen vor der Polykondensation zugegebenen Oniumkatalysator um den gleichen oben genannten oder einen von diesem verschiedenen Oniumkatalysator handeln.

Die Zugabe der Katalysatoren erfolgt vorzugsweise in Lösung, um bei der Dosierung schädliche Überkonzentrationen zu vermeiden. Die Lösungsmittel sind bevorzugt system- und verfahrensinhärente Verbindungen wie beispielsweise die verwendeten Dihydroxyarylverbindungen, Diarylcarbonate oder gegebenenfalls Monohydroxyarylverbindungen. Besonders geeignet sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht zu verändern und zersetzen beginnen. Hierunter können die Polycarbonatqualitäten leiden. In einer besonders bevorzugten Ausführungsform des erfindungsgemäßen Verfahrens ist das Lösungsmittel für den Katalysator Phenol. Phenol bietet sich in dieser Ausführungsform des erfindungsgemäßen Verfahrens insbesondere an, weil der vorzugsweise in dieser Ausführungsform verwendete Katalysator Tetraphenylphosphoniumphenolat bei seiner Herstellung als Mischkristall mit Phenol isoliert wird.

Die Polycarbonate, die nach diesem Verfahren erhalten werden, zeichnen sich strukturell dadurch aus, dass sie neben den durch Phenole der Formel (III) verkappten Kettenenden auch einen bestimmten Anteil unverkappter phenolischer Endgruppen tragen. Dieses Strukturelement kann beispielhaft durch folgende Formel (V) beschrieben werden, 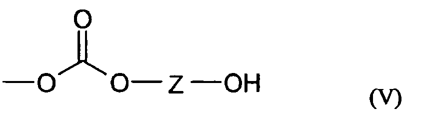 worin Z die für die allgemeine Formel (I) genannte Bedeutung hat.

Der Gehalt an phenolischen OH-Endgruppen beträgt bevorzugt mehr als 150 ppm, besonders bevorzugt mehr als 250 ppm, ganz besonders bevorzugt mehr als 350 ppm (bezogen auf das Gewicht des Polycarbonats).

Die Polycarbonate können gezielt verzweigt werden, indem der Reaktionsmischung geeignete Verzweiger zugegeben werden. Geeignete Verzweiger für die Polycarbonatherstellung sind dem Fachmann bekannt. Es handelt sich dabei um Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

Die Verzweiger werden im Allgemeinen in Mengen von beispielsweise 0,02 bis 3,6 Mol-%, bezogen auf die Dihydroxyarylverbindung, eingesetzt.

Die verwendeten Dihydroxyarylverbindungen, Diarylcarbonate, Monohydroxyarylverbindungen sowie auch alle anderen der Synthese zugesetzten Rohstoffe, Chemikalien und Hilfsstoffe können mit aus ihrer eigenen Synthese, Handhabung und Lagerung stammenden Verunreinigungen kontaminiert sein und ohne weitere Reinigung eingesetzt werden. Es ist jedoch wünschenswert, aber nicht zwingend erforderlich mit möglichst sauberen Rohstoffen, Chemikalien und Hilfsstoffen zu arbeiten.

Der Zusatz wenigstens eines Inhibitors erfolgt vor der letzten Reaktionsstufe. Im Rahmen der Erfmdung bedeutet dies, dass die Zugabe in wenigstens einer Reaktionsstufe vor der letzten Reaktionsstufe oder auch zwischen zwei Reaktionsstufen erfolgen kann. Bevorzugt erfolgt dieser Zusatz in der Reaktionsstufe unmittelbar vor der letzten Reaktionsstufe oder zwischen der vorletzten und letzten Reaktionsstufe.

Polycarbonate, die über das Schmelzeumesterungsverfahren hergestellt werden, können nach der Herstellung katalytisch aktive, basische Verunreinigungen enthalten. Dabei kann es sich zum einen um geringfügige nicht abgetrennte Verunreinigungen der Ausgangssubstanzen, nicht abgetrennte basische Reste von thermisch zersetzbaren Katalysatoren oder nicht abgetrennte stabile basische Katalysatorsalze handeln. Unter thermisch zersetzbaren Katalysatoren sind zum Beispiel die oben beschriebenen Oniumsalze zu verstehen. Unter thermisch stabilen Katalysatoren sind beispielsweise alkalisch wirkende Salze der Alkali- bzw. Erdalkalimetalle zu verstehen. Zur Inhibierung dieser katalytisch aktiven, basischen Verunreinigungen können den Polycarbonaten prinzipiell zu verschiedenen Zeitpunkten in den jeweiligen Verfahren bestimmte Inhibitoren zugesetzt werden.

Als Inhibitoren geeignet sind Säurekomponenten wie Lewis- oder Brönstedsäuren oder Ester starker Säuren. Der pKa-Wert des Inhibitors sollte nicht größer als 5, bevorzugt kleiner 3 sein. Die Säurekomponente wird bzw. deren Ester werden zugegeben, um die vorangehend genannten basischen Verunreinigungen bei Erreichen des gewünschten Molekulargewichts zu deaktivieren und damit die Reaktion im Idealfall zum Erliegen zu bringen. Solche Inhibitoren sind z.B. in EP-A 1 612 231, EP-A 435 124 oder DE-A 44 38 545 beschrieben.

Beispiele für geeignete Säurekomponenten sind ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Salzsäure (Chlorwasserstoff), Schwefelsäure, , Benzolsulfonsäure, Toluolsulfonsäure, Dodekylbenzolsulfonsäure und alle sonstigen Phenylsubstituierten Benzolsulfonsäuren, Salpetersäure, , Säurechloride wie Chlorameisensäurephenylester, , Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Dimethylsulfat, Borsäureester, Arylboronsäureester und andere unter Wassereinfluss säuregenerierende Komponenten wie Tri-iso-octylphosphin, Ultranox 640 und BDP (Bisphenoldiphosphat-Oligomer).

Bevorzugt werden als Inhibitoren organische schwefelhaltige Säuren, Ester von organischen schwefelhaltigen Säuren oder Mischungen aus diesen eingesetzt. Bei den organischen schwefelhaltigen Säuren kann es sich z.B. um Benzolsulfonsäure, Toluolsulfonsäure, Trifluormethansulfonsäure, Naphthalinsulfonsäure oder sulfoniertes Polystyrol handeln. Bei den Estern von organischen schwefelhaltigen Säuren kann es sich z.B. um Dimethylsulfonat, Diethylsulfonat, Methyl-, Ethyl-, Propyl-, Butyl-, Octyl-, oder Phenylester von p-Toluolsulfonsäure oder Benzolsulfonsäure handeln. Ferner kann es sich um Voll- oder Teilester mehrwertiger Alkohole wie z.B. Glycerintribenzolsulfonsäureester, Glycerindibenzolsulfonsäureester, Glycerinmonobenzolsulfonsäureester, Glycerintri-p-toluolsulfonsäureester, Glycerin-di-p-toluolsulfonsäureester, Glycerin-mono-p-toluolsulfonsäureester, Ethylenglykoldibenzolsulfonsäureester, Ethylenglykolmonobenzolsulfonsäureester, Ethylenglykoldi-p-toluolsulfonsäureester, Ethylenglykolmono-p-toluolsulfonsäureester, Pentaerythrittetrabenzolsulfonsäureester, Pentaerythrittribenzolsulfonsäureester, Pentaerythritdibenzolsulfonsäureester, Pentaerythritmonobenzolsulfonsäureester, Pentaerythrittetra-p-toluolsulfonsäureester, Pentaerythrittri-p-toluolsulfonsäureester, Pentaerythritdi-p-toluolsulfonsäureester, Pentaerythritmono-p-toluolsulfonsäureester, Trimethylolpropantribenzolsulfonsäureester, Trimethylolpropandibenzolsulfonsäureester, Trimethylolpropanmonobenzolsul-fonsäureester,Trimethylolpropantri-p-toluolsulfonsäureester, Trimethylolpropandi-p-toluolsulfonsäureester, Trimethylolpropanmono-p-toluolsulfonsäureester , Neopentylglykoldibenzolsulfonsäureester, Neopentylglykolmonobenzolsulfonsäureester, Neopentylglykoldi-p-toluolsulfonsäureester, Neopentylglykolmono-p-toluolsulfonsäureester sowie deren Mischungen handeln. Darüber hinaus können diese Mischungen noch Reste der Ausgangsverbindungen (Säurekomponente und/oder Alkoholkomnponente) enthalten. Solche Inhibitoren sind beispielsweise aber nicht limitierend auch in EP-A 1 609 818 beschrieben.

Die beschriebenen Inhibitoren können einzeln oder in beliebigen Mischungen untereinander oder mehreren verschiedenen Mischungen der Polymerschmelze zugesetzt werden..

Die Inhibitoren können in Mengen von kleiner 100 ppm bezogen auf das Polycarbonat eingesetzt werden, bevorzugt in Mengen von 0,1 bis 50 ppm bezogen auf das Polycarbonat, besonders bevorzugt 0,5 bis 10 ppm und ganz besonders bevorzugt in Mengen von 1 bis 5 ppm.

Bezüglich der Zugabeform der Inhibitoren gibt es keine Limitierung. Die Inhibitoren können als Feststoff, z.B. als Pulver, in Lösung oder als Schmelze der Polymerschmelze zugesetzt werden. Eine andere Art der Dosierung ist die Verwendung eines Masterbatches, d.h. einer Vermischung des Inhibitors mit dem Polymer, vorzugsweise mit Polycarbonat, welche über eine Compoundierung homogenisiert wurde, das auch weitere Additive, wie beispielsweise andere Stabilisatoren oder Entformungsmittel enthalten kann.

Bevorzugt werden die Ester von organischen schwefelhaltigen Säuren in flüssiger Form zugegeben. Da die zu dosierenden Mengen sehr gering sind, werden vorzugsweise Lösungen der Ester oder Masterbatche verwendet.

Vorzugsweise werden solche Verbindungen als Lösemittel gewählt, die bereits als andere Komponente in den jeweiligen Prozessen verwendet werden. Eventuell verbleibende Reste mindern je nach Anforderungsprofil des herzustellenden Produktes nicht die gewünschte Qualität.

Geeignete Verbindungen, welche schon im jeweiligen Prozess verwendet wurden, sind vorzugsweise solche, die chemisch inert sind und schnell verdampfen. Als solche in bevorzugten Ausführungsformen geeignet sind beispielsweise Phenol oder Diphenylcarbonat.

Als weitere Lösemittel kommen alle organischen Lösemittel mit einem Siedepunkt bei Normaldruck von 30 bis 300 °C, bevorzugt von 30 bis 250 °C und besonders bevorzugt von 30 bis 200 °C sowie auch Wasser - dazu zählt auch Kristallwasser - in Frage.

Geeignete Lösemittel können beispielsweise Wasser oder gegebenenfalls substituierte Alkane, Cycloalkane oder Aromaten sein. Die Substituenten können aliphatische, cycloaliphatische oder aromatische Reste in unterschiedlicher Kombination sowie Halogene oder Hydroxylgruppen sein. Heteroatome, wie beispielsweise Sauerstoff, können auch zwischen aliphatischen, cycloaliphatischen oder aromatischen Resten Brückenglieder sein, wobei die Reste gleich oder unterschiedlich sein können. Weitere Lösemittel können auch Ketone und Ester organischer Säuren sowie cyclische Carbonate sein. Weiterhin kann der Inhibitor auch in Glycerinmonostearat gelöst und zudosiert werden. Als Lösemittel können auch Mischungen aus den vorangehend genannten verwendet werden.

Beispiele für solche Lösemittel sind neben Wasser n-Pentan, n- Hexan, n-Heptan und deren Isomere, Chlorbenzol, Methanol, Ethanol, Propanol, Butanol und deren Isomere, Phenol, o-, m- und p-Kresol, Aceton, Diethylether, Dimethylketon, Polyethylenglycole, Polypropylenglycole, Essigsäureethylester, Ethylencarbonat, Propylencarbonat und Mischungen aus diesen.

Bevorzugt geeignet sind Wasser, Phenol, Propylencarbonat, Ethylencarbonat, Toluol und Mischungen aus diesen.

Besonders bevorzugt geeignet sind Wasser, Phenol, Propylencarbonat und Mischungen aus diesen.

Zur wirksamen Einmischung des Inhibitors sind beispielsweise statische Mischer oder andere zu einer homogenen Einmischung führende dynamische Mischer, wie beispielsweise Extruder, geeignet.

In oder nach der letzten Reaktionsstufe des erfindungsgemäßen Verfahrens werden der Reaktionsmischung (Reaktionsmischungsschmelze) eine oder mehrere aliphatische Hydroxydicarbonsäure(n) und/oder Hydroxypolycarbonsäure(n) oder deren Derivat(e) zugegeben. Die Zugabe erfolgt demnach vorzugsweise im sogenannten Finishreaktor oder nach dem Finishreaktor, insbesondere bevorzugt nach dem Finishreaktor.

Unter aliphatischen Hydroxypolycarbonsäure(n) sind erfindungsgemäß solche mit mehr als zwei Carbonsäuregruppen zu verstehen. Bevorzugt sind aliphatische Hydroxypolycarbonsäure(n) im Rahmen der Erfmdung solche mit drei, vier oder fünf Carbonsäuregruppen. Besonders bevorzugte aliphatische Hydroxypolycarbonsäuren sind aliphatische Hydroxytricarbonsäuren.

In bevorzugten Ausführungsformen werden der Reaktionsmischung eine oder mehrere aliphatische Hydroxydicarbonsäure(n) und/oder Hydroxytricarbonsäure(n) oder deren Derivat(e) zugegeben.

Unter Derivaten von aliphatischen Hydroxydicarbonsäure(n) und/oder Hydroxypolycarbonsäure(n) sind beispielsweise Salze, Ester, Amide, Halogenide oder Anhydride der entsprechenden Säuren, bevorzugt Ester der entsprechenden Säuren, oder aber an der Hydroxygruppe derivatisierte Carbonsäuren, wie beispielsweise Alkoxycarbonsäuren zu verstehen.

Bevorzugte aliphatische Hydroxydicarbonsäuren und/oder Hydroxypolycarbonsäuren oder deren Derivate sind beispielsweise solche der allgemeinen Formeln (VI) bzw (VII), 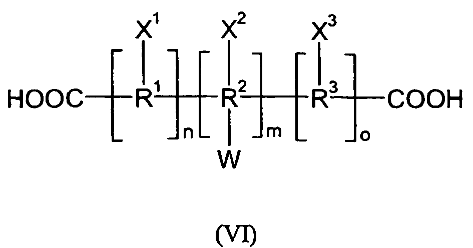 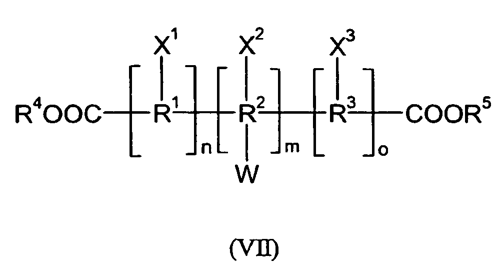 worin
- R¹, R², R³: unabhängig voneinander für einen linearen oder verzweigten, vorzugsweise einen linearen C₁-C₁₀-Alkylenrest, besonders bevorzugt für einen linearen oder verzweigten, vorzugsweise linearen C₁-C₆-Alkylenrest stehen,
- X¹, X², X³: unabhängig voneinander für H oder OH stehen, wobei wenigstens einer der Reste X¹, X², X³ für OH steht,
- W: für H, COOH, ein Carboxylat oder Alkylcarboxyl-, bevorzugt für COOH steht,
- n: für eine ganze Zahl von 1 bis 3, bevorzugt für 1 steht,
- m: für 0 oder eine ganze Zahl von 1 bis 3, bevorzugt für 0 oder 1 steht,
- o: für 0 oder oder eine ganze Zahl von 1 bis 3, bevorzugt für 0 oder 1 steht,
- R⁴, R⁵: unabhängig voneinander für einen linearen oder verzweigten C₁-C₁₀-Alkylrest, bevorzugt für einen linearen oder verzweigten C₁-C₆-Alkylrest, oder ein Alkalikation, bevorzugt Li⁺, Na⁺ oder K⁺, besonders bevorzugt für einen linearen oder verzweigten C₁-C₆-Alkylrest stehen.

Besonders bevorzugte aliphatische Hydroxydicarbonsäuren und/oder Hydroxypolycarbonsäuren oder deren Derivate sind beispielsweise Äpfelsäure, Äpfelsäureester, Äpfelsäurehalbester, Weinsäure, Weinsäureester, Weinsäurehalbester, Hydroxymalonsäure oder deren Ester, Zitronensäure oder deren Ester. Dabei sind alle Stereoisomeren, Gemische der Stereoisomeren oder racemischen Gemische und auch Gemische der oben genannten Säuren oder Ester geeignet und im Rahmen der Erfindung umfasst. Insbesondere bevorzugt sind Weinsäure oder Äpfelsäure oder deren Derivate oder Mischungen aus diesen.

Die aliphatischen Hydroxydicarbonsäuren und/oder Hydroxypolycarbonsäuren oder deren Derivate werden beispielsweise in Mengen von 5 bis 500 ppm, bevorzugt 10 bis 300 ppm, besonders bevorzugt 20 bis 200 ppm, bezogen auf das Polycarbonat, in oder nach der letzten Reaktionsstufe des erfindungsgemäßen Verfahrens eingesetzt.

Durch diese Kombination der Zugabe von wenigstens einem Inhibitor in einer Reaktionsstufe vor der letzten Reaktionsstufe und der Zugabe wenigstens einer aliphatischen Hydroxydicarbonsäure und/oder Hydroxypolycarbonsäure oder deren Derivat in der letzten Reaktionsstufe können mittels Schmelzeumesterungsverfahren Polycarbonate erhalten werden, die bei der weiteren Verarbeitung, beispielsweise mittels Spritzguss, zu Formteilen mit niedriger elektrostatischer Aufladung auf der Oberfläche führen. Eine solche Kombination von Inhibitoren und zusätzlichen aliphatischen Hydroxydicarbonsäuren und/oder Hydroxypolycarbonsäuren oder deren Derivate in dieser bestimmten zeitlichen Abfolge innerhalb des Verfahrens ist in der Literatur bisher nicht beschrieben. Der Effekt der niedrigen elektrostatischen Aufladung bei geringer lokaler Variation auf der Oberfläche der resultierenden Formkörper oder Extrudate ist umso überraschender als beispielsweise der Zusatz von Inhibitoren der oben genannten Art vor dem Finishreaktor ohne die zusätzliche Zugabe wenigstens einer aliphatischen Hydroxydicarbonsäure und/oder Hydroxypolycarbonsäure oder deren Derivat in der letzten Reaktionsstufe bereits bekannt ist (vgl. z.B. EP-A 1 612 231 und DE-A 103 57 161) jedoch keinerlei positiven Effekt auf die elektrostatischen Eigenschaften der resultierenden Formkörper oder Extrudate zeigt.

Das erfindungsgemäße Verfahren kann diskontinuierlich oder auch kontinuierlich durchgeführt werden.

Nachdem die Dihydroxyarylverbindungen und Diarylcarbonate, gegebenenfalls mit weiteren Verbindungen, wie beispielsweise einer höhersiedenden Monohydroxyarylverbindung, als Schmelze vorliegen, wird in Gegenwart wenigstens eines geeigneten Katalysators die Umsetzung gestartet. Der Umsatz bzw. das Molekulargewicht wird bei steigenden Temperaturen und fallenden Drucken in geeigneten Apparaten und Vorrichtungen durch Abführen der sich abspaltenden Monohydroxyarylverbindung solange erhöht, bis der angestrebte Endzustand, d.h. der gewünschte Umsatz bzw. das gewünschte Molekulargewicht erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und gegebenenfalls zugesetzter weiterer Verbindungen, wie beispielsweise einer höhersiedenden Monohydroxyarylverbindung, werden die Endgruppen in Art und Konzentration geprägt.

**C₁-C₄-Alkyl** steht im Rahmen der Erfindung beispielsweise für Methyl, Ethyl, n-Propyl, isoPropyl, n-Butyl, sec.-Butyl, tert.-Butyl, **C₁-C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₀-Alkyl** darüber hinaus beispielsweise für n-Heptyl und n-Octyl, Pinakyl, Adamantyl, die isomeren Menthyle, n-Nonyl, n-Decyl, **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl-oder Aralkyl- bzw. Alkylarylresten stehen beispielsweise für die den vorangehenden Alkylresten entsprechenden Alkylenreste.

**Aryl** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Bezüglich der Art und Weise in welcher Anlage und nach welcher Verfahrensweise der Prozess ausgeführt wird, gibt es prinzipiell keine Limitierung und Einschränkung. Bevorzugt kann der Prozess wie im Folgenden beschrieben durchgeführt werden.

Des Weiteren gibt es keine spezielle Limitierung und Einschränkung bezüglich der Temperaturen und der Drucke für das erfindungsgemäße Verfahren. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Verfahrens liegen im Allgemeinen zwischen 180 und 330 °C, die Drucke zwischen 15 bar, absolut und 0,01 mbar, absolut.

Bevorzugt wird eine kontinuierliche Verfahrensweise gewählt, weil diese vorteilhaft für die Produktqualität sein kann.

Vorzugsweise ist ein solches kontinuierliches erfindungsgemäßes Verfahren in der Weise durchgeführt, dass eine oder mehrere Dihydroxyarylverbindungen mit einem oder mehreren Diarylcarbonat(en) und gegebenenfalls weiteren Reaktanden unter Verwendung von wenigstens einem Katalysator vorkondensiert werden und nach dieser Vorkondensation ohne Abtrennen der gebildeten Monohydroxyarylverbindung(en) in mehreren sich daran anschließenden Reaktions-Verdampfer-Stufen bei schrittweise steigenden Temperaturen und schrittweise fallenden Drucken das Molekulargewicht des Endproduktes bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventile miteinander verbunden. Die Rohrleitungen zwischen allen Einrichtungen sollten selbstverständlich so kurz wie möglich sein und die Anzahl der Krümmungen der Leitungen so gering wie möglich gehalten werden, um unnötig verlängerte Verweilzeiten zu vermeiden. Dabei sind die äußeren, d.h. technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste(n) Dihydroxyarylverbindung(en) in der Diarylcarbonatschmelze oder das oder die feste Diarylcarbonat(e) in der Schmelze der Dihydroxyarylverbindung(en) gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbussen länger verweilen.

Danach wird der oder die Katalysator(en), vorzugsweise in einem geeigneten Lösemittel, wie z.B. Phenol, gelöst, zugemischt und die Schmelze auf die Reaktionstemperatur erhitzt.

In bevorzugten Ausführungsformen des erfindungsgemäßen Verfahrens wird aus dem Schmelzestrom zwischen dem vorletzten Reaktor und dem Finishreaktor mittels einer Zahnradpumpe ein Teilstrom entnommen, in den wenigstens ein Inhibitor zudosiert wird. Das Gemisch wird direkt danach zur intensiven Vermischung über einen statischen Mischer in den Hauptstrom zurückgepumpt. Hinter der Eintrittsstelle folgt in Flussrichtung ein weiterer statischer Mischer, der die homogene Verteilung im Schmelzehauptstrom besorgt, welcher dann in den Endreaktor geleitet wird. Im Endreaktor, der zur Restmonomerreduzierung eingesetzt wird, werden dann bei Temperaturen von 260 bis 310 °C, vorzugsweise bei 265 bis 300 °C und besonders bevorzugt bei 270 bis 290 °C und bei Drucken von 0,01 bis 3 mbar, bevorzugt von 0,2 bis 2,5 mbar und besonders bevorzugt von 0,4 bis 2 mbar die Restmonomeren reduziert. Die Füllstände werden in dem Endreaktor so niedrig wie verfahrenstechnisch möglich eingestellt. Die Verweilzeit im Endreaktor - auch Finishreaktor genannt - liegt in der Größenordnung von einigen Minuten bis Stunden, bevorzugt sind 5 bis 180 Minuten, besonders bevorzugt 10 bis 150 Minuten und ganz besonders bevorzugt 15 bis 120 Minuten. Ein möglicherweise gegebener geringfügiger Molekulargewichtsaufbau im Endreaktor, in dem vorwiegend die Ausdampfung der Restmonomeren erfolgen soll, kann dadurch ausgeglichen werden, dass das Eintrittsmolekulargewicht soweit abgesenkt wird, dass nach der Ausdampfung der Restmonomeren das gewünschte Endmolekulargewicht genau erreicht wird. Das fertige Polycarbonat wird mittels einer Pumpvorrichtung aus dem Endreaktor ausgetragen, bei Bedarf nach bekannten Verfahren mit Zuschlagstoffen zur Eigenschaftsverbesserung ausgestattet, als Strang gezogen, abgekühlt und granuliert. Als Pumpvorrichtung wird in der Regel eine Zahnradpumpe verwendet. Alternativ können auch Schnecken unterschiedlichster Bauart oder Verdrängerpumpen spezieller Bauart benutzt werden.

Die besonders bevorzugte Ausführungsform des erfindungsgemäßen Verfahrens, in der beispielsweise 2,2-Bis-(4-hydroxyphenyl)-propan (Bisphenol A, BPA) und Diphenylcarbonat (DPC) miteinander zu Polycarbonat umgesetzt werden, sei im Folgenden beispielhaft aber nicht einschränkend beschrieben:

Dabei beträgt die Reaktionstemperatur zu Beginn dieser besonders bevorzugten Ausführungsform 180 bis 220 °C, vorzugsweise 190 bis 210 °C, ganz besonders bevorzugt 190 °C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage gegebenenfalls mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250 °C, bevorzugt 210 bis 240 °C, besonders bevorzugt 210 bis 230 °C, erwärmt. Auch hierbei wird die entstandene Hydroxyarylverbindung mit noch vorhandenen Monomeren verdampft. Nach einer Verweilzeit von 5 bis 30 Minuten in einer Sumpfvorlage, gegebenenfalls mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280 °C, bevorzugt 240 bis 270 °C, besonders bevorzugt 240 bis 260 °C, erwärmt. Auch hierbei wird die entstandene Hydroxyarylverbindung mit noch vorhandenen Monomeren verdampft. Nach einer Verweilzeit von 5 bis 20 Minuten in einer Sumpfvorlage gegebenenfalls mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300 °C, vorzugsweise 260 bis 290 °C, besonders bevorzugt 260 bis 280 °C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte relative Viskosität des Oligocarbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage gegebenenfalls mit Umpumpung bei gleichem Druck und gleicher Temperatur wie in der letzten Flash-/Verdampferstufe in einen Scheiben- oder Korbreaktor gefördert und bei 250 bis 310 deg. C, bevorzugt 250 bis 290 °C, besonders bevorzugt 250 bis 280 °C, bei Drucken von 1 bis 15 mbar, vorzugsweise 2 bis 10 mbar, bei Verweilzeiten von 30 bis 90 min, vorzugsweise 30 bis 60 Minuten, weiter aufkondensiert. Das Produkt erreicht eine relative Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330 °C, bevorzugt 280 bis 320 °C, besonders bevorzugt 280 bis 310 °C, der Druck 0,01 bis 3 mbar, vorzugsweise 0,2 bis 2 mbar, bei Verweilzeiten von 60 bis 180 Minuten, vorzugsweise 75 bis 150 Minuten. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Das so erhaltene Polycarbonat enthält idealerweise weniger als 350 ppm Diphenylcarbonat (DPC), weniger als 40 ppm 2,2-Bis-(4-hydroxyphenyl)-propan (BPA) und weniger als 150 ppm Phenol, bevorzugt weniger als 300 ppm DPC, weniger als 30 ppm BPA, und weniger als 100 ppm Phenol, besonders bevorzugt weniger als 250 ppm DPC, weniger als 20 ppm BPA, und weniger als 80 ppm Phenol, sowie insbesondere besonders bevorzugt weniger als 200 ppm DPC, weniger als 15 ppm BPA und weniger als 70 ppm Phenol.

Die Funktion der beiden Korbreaktoren kann auch in einem Korbreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäß DE-A 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP-A 1 253 163, oder Zweiwellenreaktoren, wie sie in der WO-A 99/28 370 beschrieben sind.

Die vorangehend beschriebene besonders bevorzugte Ausführungsform der erfindungsgemäßen Verfahrens kann auch für die Umsetzung von anderen Dihydroxyarylverbindungen bzw. Diarylcarbonaten als 2,2-Bis-(4-hydroxyphenyl)-propan (Bisphenol A, BPA) und Diphenylcarbonat (DPC) verwendet werden. Dabei können gegebenenfalls Anpassungen der Temperatur- und Druckeinstellungen in den einzelnen Verfahrensstufen erforderlich sein.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z. B. 1.4571 oder 1. 4541 (Stahlschlüssel 2001, Verlag: Stahlschlüssel Wegst GmbH, Th-Heuss-Strasse 36, D-71672 Marbach) und Ni-Basislegierungen vom Typ C, wie z. B. 2.4605 oder 2.4610 (Stahlschlüssel 2001, Verlag: Stahlschlüssel Wegst GmbH, Th-Heuss-Strasse 36, D-71672 Marbach). Die nicht rostenden Stähle werden bis zu Prozesstemperaturen von etwa 290 °C und die Ni-Basislegierungen bei Prozesstemperaturen oberhalb von etwa 290 °C benutzt.

Die wesentlichen Verfahrensparameter wie Verhältnis Diarylcarbonat zu Dihydroxyarylverbindung zu Beginn des Prozesses, Druck, Temperatur und Verweilzeit sind in der Gesamtanlage vor dem End- bzw. Finishreaktor so zu wählen, dass vor Eintritt der Reaktionsschmelze in den End- bzw. Finishreaktor ein für die vorgesehene Anwendung des herzustellenden Produktes ausreichendes Molekulargewicht und bestimmte OH-Endgruppengehalte erreicht werden. Das Endmolekulargewicht ist im wesentlichen von der gewählten Austrittstemperatur des Reaktors, dem Druck und der OH-Endgruppenkonzentration abhängig. Diese Bedingungen sind also im vorletzten Reaktor so zu wählen, um das angestrebte Endprodukt herstellen zu können. Der Gehalt an OH-Endgruppen in den Polycarbonaten liegt bevorzugt oberhalb von 150 ppm, besonders bevorzugt oberhalb von 250 ppm, ganz besonders bevorzugt oberhalb von 350 ppm. Besonders bevorzugt ist ein OH-Endgruppengehalt zwischen 150 und 750 ppm, vorzugsweise zwischen 250 und 650 ppm, besonders bevorzugt zwischen 350 und 600 ppm.

Um einen niedrigen Gehalt an Restmonomeren zu erhalten, ist die Schmelze vor dem Finishreaktor, bevorzugt zwischen vorletztem und letztem Reaktor bzw. vor einem Entgasungsapparat mit wenigstens einem der vorangehend genannten geeigneten Inhibitoren intensiv zu vermischen, um die Reaktion zu stoppen. Danach können im Finishreaktor (bzw. Entgasungsapparat) die Monomeren abgedampft werden.

Das mit dem erfmdungsgemäßen Verfahren hergestellte Polycarbonat eignet sich insbesondere für gegebenenfalls wiederbeschreibbare optische Datenträger mit guter Beschicht- und Benetzbarkeit sowie geringer Verschmutzungsneigung. Zudem treten bei der Verarbeitung des Polycarbonats zu Formteilen bzw. Extrudaten wenig Ablagerungen an Werkzeugen oder auf den entsprechenden Formteilen bzw. Extrudaten auf.

Das nach dem erfindungsgemäßen Verfahren hergestellte Polycarbonat eignet sich zudem für die Herstellung von Spritzgussartikeln, welche überraschend niedrige Werte für die elektrische Feldstärke sowie eine hohe Ladungshomogenität aufweisen. Für Spritzgussartikel, die mittels bekannter Spritzprozesse ohne Einsatz von Ionisatoren hergestellt wurden, können für die mittlere elektrische Feldstärke beispielsweise Werte in einem akzeptablen Bereich von -20 kV/m bis + 20 kV/m und einer mittleren Variation der elektrischen Feldstärke von weniger als 15 kV/m erzielt werden.

Solche Polycarbonate hergestellt mittels Schmelzeumesterungsverfahren sind bisher nicht verfügbar und in der Literatur nicht beschrieben.

Ebenfalls Gegenstand der Erfmdung sind daher die aus den erfindungsgemäßen Verfahren hergestellten Polycarbonate.

Diese Polycarbonate weisen bevorzugt einen Gehalt an phenolischen OH-Endgruppen von mehr als 150 ppm, bevorzugt mehr als 200 ppm, besonders bevorzugt mehr als 250 ppm auf.

Die Bestimmung der Menge an OH-Endgruppen kann über NMR-Messung, IR-Messung oder durch on-line IR-Messung der OH- Endgruppen erfolgen. Ferner kann die Bestimmung der OH-Gruppen photometrisch erfolgen. Die IR- und die photometrische Methode ist in Horbach, A.; Veiel, U.; Wunderlich, H., Makromolekulare Chemie 1965, Band 88, S. 215-231 beschrieben. Die im Rahmen der Erfmdung angegebenen Werte für den Gehalt an phenolischen OH-Gruppen wurden mittels IR-Messung bestimmt.

Spritzgusskörper aus herkömmlichem Polycarbonat hergestellt nach dem Schmelzeumesterungsprozess haben die Eigenschaft, hohe und lokal inhomogene elektrische Felder an der Oberfläche der Spritzgussartikel aufzubauen. So bauen z.B. Disks für optische Datenspeicher aus diesem Polycarbonat während ihrer Herstellung im Spritzgussverfahren ein hohes elektrisches Feld auf Diese hohe Feldstärke auf dem Substrat führt während der Herstellung der optischen Datenspeicher z.B. zur Anziehung von Staub aus der Umgebung bzw. zum Verkleben der Spritzgussartikel, beispielsweise der Disks, untereinander, was die Qualität der fertigen Spritzgussartikel mindert und das Spritzgussverfahren zudem erschwert.

Des Weiteren führt die elektrostatische Aufladung insbesondere von Disks (für optische Datenträger) zu einer mangelnden Benetzbarkeit vor allem mit unpolaren Medien, wie z.B. einem unpolaren Farbstoff oder einem Farbstoffauftrag aus Lösungsmitteln, wie z.B. Dibutylether, Ethylcyclohexan, Tetrafluorpropanol, Cyclohexan, Methylcyclohexan oder Octafluorpropanol. So verursacht eine hohe elektrische Aufladung an der Oberfläche des Substrates während des Farbstoffauftrags bei beschreibbaren Datenspeichern zum Beispiel eine unregelmäßige und unvollständige Beschichtung mit Farbstoff und führt damit zu Defekten in der Informationsschicht.

Es hat sich gezeigt, dass die erfindungsgemäßen Polycarbonate besonders geeignet sind, Spritzgussartikel zu liefern, die nach einem bestimmten Produktionszeitraum eine bestimmte elektrische Feldstärke, gemessen in einem definierten Abstand zur Substratoberfläche und bei definierter Temperatur und Luftfeuchtigkeit, nicht überschreiten. Um ein akzeptables Beschichtungsverhalten zu erreichen ist es wünschenswert, dass eine elektrische Feldstärke von ± 20 kV/m nach 2 Stunden eines kontinuierlichen Spritzgussprozesses nicht überschritten wird und das elektrostatische Feld auf der Diskoberfläche sehr homogen ist, d.h. eine geringe Feldstärkenvariation besitzt. Die für die erfindungsgemäßen Polycarbonate erreichten Werte für die mittlere elektrische Feldstärke liegen bevorzugt von -20 bis +20 kV/m und bei einer geringen Feldstärkenvariation von weniger als 15 kV/m nach 2 Stunden eines kontinuierlichen Spritzgussprozesses. Die Werte der elektrischen Feldstärke stellen sich im Allgemeinen innerhalb einer Stunde ein und verändern sich pro Zeiteinheit danach nur noch geringfügig oder gar nicht mehr. Die vorangehend genannten Werte der elektrischen Feldstärke für die erfindungsgemäßen Substratmaterialien können zudem ohne den Einsatz von Ionisatoren erzielt werden, so dass bei der Weiterverarbeitung der Polycarbonate die Verwendung von Ionisatoren weitgehend reduziert werden kann.

Ein Spritzgusskörper aus Polycarbonat, wie z.B. eine optische Disk, mit den oben genannten Eigenschaften bezüglich der elektrischen Feldstärke, zeichnet sich durch gute Beschichtbarkeit mit Farbstoffen aus. Dies ist wichtig, um eine fehlerfreie Auftragung der beschreibbaren Schicht und somit einen störungsfreien Produktionsprozess sicherzustellen. Dies führt zu einer deutlich verringerten Ausschussrate gegenüber herkömmlichen Substratmaterialien.

Die elektrische Feldstärke hervorgerufen durch Oberflächenladungen auf dem entsprechenden Substrat ist von der Geometrie und den Dimensionen des Spritzgussformkörpers und Art des Spritzgussprozesses abhängig. Deshalb ist die Messung der elektrischen Feldstärke an einem gefertigten Spritzgussformkörper, wie z.B. einer Disk für einen optischen Datenträger, durchzuführen.

Die niedrigen Werte für die elektrische Feldstärke sind insbesondere überraschend mit Blick auf den relativ hohen Gehalt an phenolischen OH-Gruppen in den erfindungsgemäßen Polycarbonaten.

Das Gewichtsmittel des Molekulargewichts des Polycarbonats beträgt im Allgemeinen M_{w} = 10.000 bis 40.000 g/mol, bevorzugt 15.000 bis 36.000 und insbesondere bevorzugt 18.000 bis 35.000 g/mol. Das Gewichtsmittel des Molekulargewichts wird dabei über die Grenzviskosität nach der Mark-Houwink Korrelation bestimmt (G.V. Schulz, H. Horbach, Makromol. Chem. 1959, 29, 93). Die Grenzviskosität erhält man, wenn man die Viskosität einer Polycarbonatlösung in Methylenchlorid bei 25 °C mittels eines Ubbelohde Kapillarviskosimeters nach DIN EN ISO 1628 bestimmt. Über die Mark-Houwink-Beziehung erhält man das Gewichtsmittel des Molekulargewichts für Polycarbonat nach [η] = K x M_{w}^{α} ([η]: Grenzviskosität; K: 11,1 x 10⁻³ ml/g; α: 0,82).

Die Polycarbonate haben zudem bevorzugt einen äußerst geringen Gehalt von salzartigen Verunreinigungen. Die durch salzartige Verunreinigungen resultierende Menge an Alkali- oder Erdalkaliionen bestimmt durch Atomabsoptionspektroskopie sollte weniger als 60 ppb, bevorzugt von weniger als 40 ppb und besonders bevorzugt von weniger als 20 ppb betragen. Die salzartigen Verunreinigungen können beispielsweise aus Verunreinigungen aus den verwendeten Rohstoffen und den Phosphonium- und Ammoniumsalzen stammen. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe kleiner als 2 ppm, bevorzugt kleiner als 1 ppm und besonders bevorzugt kleiner 0,5 ppm.

Als Anionen liegen solche von anorganischen Säuren und von organischen Säuren in äquivalenten Mengen vor (z. B. Chlorid, Sulfat, Carbonat, Phosphat, Phosphit, Oxalat, u.a.).

Angestrebt werden geringste Mengen solcher Kationen und Anionen, weshalb die Verwendung möglichst reiner Rohstoffe vorteilhaft ist. Derart reine Rohstoffe können aus den teilweise verunreinigten technischen Rohstoffen beispielsweise durch zusätzliche Reinigungsoperationen vor deren Einsatz, wie z.B. durch Umkristallisieren, Destillieren, Umfällen mit Wäschen u. ä. erhalten werden.

Weiterhin kann das erfindungsgemäße Polycarbonat zur Veränderung von Eigenschaften mit weiteren, üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fliesshilfsmittel), der Verbesserung der Gebrauchseigenschaften, der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern). Solche Zuschlagstoffe und Additive werden z.B. in "Plastics Additives", R. Gächter und H. Müller, Hanser Publishers 1983, beschrieben.

Die Mengen an Flammschutzmittel, Entformungsmittel, UV-Stabilisatioren, Thermostabilisatoren, werden derart gewählt, wie sie dem Fachmann für aromatische Polycarbonate bekannt sind. Allerdings ist aus den eingangs beschriebenen Gründen die Menge der eingesetzten Additive möglichst gering zu halten. Beispiele für derartige Additive sind Entformungsmittel auf Basis von Stearinsäure und/oder Stearinalkohol, besonders bevorzugt Pentaerythritstearat, Trimethylolpropantristearat, Pentaerytritdistearat, Stearylstearat, und Glycerinmonostearat, sowie übliche Thermostabilisatoren.

Um die gewünschten Eigenschaften zu erreichen können die unterschiedlichen Additive miteinander kombiniert werden. Diese Additive und Zuschlagstoffe können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt.

Dabei können die Additive und Zuschlagstoffe beziehungsweise deren Mischungen als Feststoff, also als Pulver, oder als Schmelze der Polymerschmelze zugesetzt werden. Eine andere Art der Dosierung ist die Verwendung von Masterbatches, d.h. einer Vermischung des Additivs bzw. Zuschlagstoffes mit dem Polymer, bevorzugt mit Polycarbonat, welche über eine Compoundierung homogenisiert wurde, oder Mischungen von Masterbatches der Additive oder Additivmischungen.

Der Zusatz dieser Stoffe erfolgt vorzugsweise auf herkömmlichen Aggregaten zum fertigen Polycarbonat erfolgen.

Geeignete Additive sind beispielsweise beschrieben in Additives for Plastics Handbook, John Murphy, Elsevier, Oxford 1999 oder Plastics Additives Handbook Hans Zweifel, Hanser, München 2001.

Die erfindungsgemäßen Polycarbonate eignen sich hervorragend als Substratmaterialien für transparente Spritzgussteile, insbesondere für zu beschichtende Spritzgussteile, wie z.B. transparente Platten, Linsen, optische Speichermedien bzw. Träger für optische Speichermedien oder auch Artikel aus dem Bereich des Automotive Glazings wie z.B. Streulichtscheiben. So lassen sich aus dem erfindungsgemäßen Polycarbonat insbesondere optische Speichermedien bzw. Träger für optische Speichermedien wie z.B. beschreibbare optische Datenspeicher herstellen, welche gute Beschichtbarkeit und Benetzungsfähigkeit aufweisen und z.B. für die Auftragung von Farbstoffen aus Lösung insbesondere aus unpolaren Medien geeignet sind. Zudem weisen die optischen Spritzgussteile, die aus diesen Polycarbonaten hergestellt wurden, eine geringere Verschmutzungsneigung auf.

Ebenfalls Gegenstand der Erfmdung sind daher auch die aus den erfindungsgemäßen Polycarbonaten hergestellten Formteile oder Extrudate wie z.B. Disks für beschreibbare optische Datenspeicher oder Materialien aus dem Bereich des Automotive Glazings wie z.B. Streulichtscheiben.

Ebenfalls Gegenstand der Erfmdung sind optische Scheiben, die zur Herstellung von optischen Datenspeichern dienen. Optische Scheiben im Rahmen dieser Erfindung sind die Spritzgussartikel, welche im Spritzgießverfahren mit Hilfe eines Spritzgussaggregates und einer Spritzgussform hergestellt werden. Die optischen Scheiben werden aus dem Substratmaterial hergestellt und sind weder beschichtet noch nachbehandelt. Ein nicht einschränkendes Herstellverfahren für die optische Scheiben ist den Beispielen angeführt. Demnach stellt die optische Scheibe das Vorstück zum optischen Datenträger vor Beschichtung und Nachbehandlung dar.

Die nachfolgenden Beispiele dienen der beispielhaften Erläuterung der Erfindung, sind jedoch in keiner weise als Beschränkung aufzufassen.

### Beispiele

### Grenzviskosität/Molekulargewicht:

Das Gewichtsmittel des Molekulargewichts wird über die Grenzviskosität nach der Mark-Houwink Korrelation bestimmt (G.V. Schulz, H. Horbach, Makromol. Chem. 1959, 29, 93). Die Grenzviskosität erhält man, wenn man die Viskosität einer Polycarbonatlösung in Methylenchlorid bei 25 °C mittels eines Ubbelohde Kapillarviskosimeters nach DIN EN ISO 1628 bestimmt. Über die Mark-Houwink-Beziehung erhält man das Gewichtsmittel des Molekulargewichts für Polycarbonat nach [η] = K x M_{w}^{α} ([η]: Grenzviskosität; K: 11,1 x 10⁻³ ml/g; α: 0,82).

### Gehalt an phenolischen OH-Endgruppen:

Der Gehalt an phenolischen OH-Endgruppen wurde durch photometrische Bestimmung des TiCl4-Komplexes bestimmt nach Horbach et. al. (Die Makromolekulare Chemie 88 (1965) 215-231).

### Messung der elektrischen Feldstärke:

Die Messungen der elektrischen Feldstärke wurden an fertigen Spritzgussteilen, im vorliegenden Fall an Disks, durchgeführt. Zur Herstellung dieser optischen Disks wurden folgende Spritzgussparameter und Bedingungen eingestellt:
Maschine: Netstal Discjet
Matritze: Audio-Stamper
Zykluszeit: 4,4 s
Massetemperatur: 310 - 330 °C
Substratdimensionen : Audio-CD
Werkzeugtemperatur matrizenseitig: 60 °C

Vor Beginn des Spritzgussprozesses wurde ein neuer Audio-Stamper in die Maschine eingesetzt. Vor Einsetzen des neuen Stampers wurde die gesamte Spritzgussanlage von vorangegangenem Material gereinigt, damit die Messwerte nicht verfälscht wurden. Ferner wurden zunächst zwei Stunden lang Discs mit einer Zykluszeit von 4,4 Sekunden gespritzt, dadurch wird sichergestellt, dass ein stabiler und repräsentativer Zustand der Anlage bzw. der Disks hinsichtlich der elektrostatischen Aufladung erreicht wurde. Nach dieser Vorlaufzeit von 2 Stunden wurden die nächsten 100 Disks alle wie folgt vermessen:
Jede dieser Disks wurde unmittelbar nach Ende des Spritzgussprozesses über einen Roboterarm aus dem Spritzgusswerkzeug entnommen und auf einem Drehteller abgelegt. Die Disk wurde dabei nur über vier Punkte im Außenbereich auf diesem Drehteller gehalten, so dass die auf der Disk befmdliche Ladung (elektrostatische Feld) praktisch nicht beeinträchtigt wurde. Nachdem der Drehteller die Disk auf eine Position gebracht hatte, auf der sich die Messsonde zur Messung der elektrischen Feldstärke (Sonde 3455E der Firma TREK Inc., 11601 Maple Ridge Rd., Medina, N.Y. 14103) befand, wurde die Disk an dieser Position mithilfe eines Lifters im Innenlochbereich erfasst und ca. 2 cm angehoben. Damit befand sich die Disk in einem Abstand von 5 mm zur Messsonde, die im übrigen so montiert war, dass ihr Messbereich auf den Radius 35mm der Disk zielte. Anschließend wurde die Disk mithilfe dieses Lifters, der mittels eines Motors drehbar war, unter der Sonde für eine Umdrehung bewegt. Das elektrostatische Feld wurde dabei praktisch kontinuierlich (200 Messpunkte pro Umdrehung) aufgenommen. Dazu wurden die von der Sonde gelieferten Signale zunächst als Analogsignal in das Messgerät (Model 341B der Firma TREK Inc., 11601 Maple Ridge Rd., Medina, N.Y. 14103) überführt, dort mittels eines Analog-DigitalWandlers in digitale Messwerte umgewandelt, die mittels geeigneter Software erfasst wurden. Für jede Disks wurden so pro Umdrehung 200 Messwerte aufgenommen und ausgewertet. Dabei wurde die mittlere elektrische Feldstärke (Fₘᵢₜₜₑₗ) der 200 Werte durch Mittelwertbildung errechnet, sowie die jeweils maximale und die minimale elektrische Feldstärke (Fₘᵢₙ und Fₘₐₓ) bestimmt. Die für jede der 100 Disks vorliegenden Werte für Fₘᵢₜₜₑₗ, Fₘᵢₙ und Fₘₐₓ wurden nunmehr insgesamt wieder gemittelt. Man erhielt so für den Satz von 100 Disks die mittlere elektrische Feldstärke, die mittlere maximale und die mittlere minimale elektrische Feldstärke. Die Differenz zwischen der mittleren maximalen und mittleren minimalen elektrischen Feldstärke wurde per Subtraktion ebenfalls bestimmt und im Folgenden als Feldstärkenvariation bezeichnet.

### Beispiel 1 (Vergleichsbeispiel)

Aus einer Vorlage wurden 7500 kg/h Schmelzegemisch aus 3741 kg/h Diphenylcarbonat (17,45 kmol/h) und 3759 kg/h Bisphenol A (16,47 kmol/h), unter Zusetzen von 4,19 kg/h einer Katalysatormischung, durch einen Wärmetauscher gepumpt, auf 190°C erwärmt und durch eine Verweilkolonne bei 12 bar und 190 °C geführt. Die mittlere Verweilzeit betrug 50 Minuten. Die Katalysatormischung bestand aus 0,52 kg des Phenoladdukts von Tetraphenylphosphoniumphenolat (enthaltend 65,5 Gew.-% Tetraphenylphosphoniumphenolat 0,786 mol) gelöst in 4,5 kg Phenol.

Die Schmelze wurde dann über ein Entspannungsventil in einen unter einem Druck von 200 mbar stehenden Abscheider geleitet. Die abfließende Schmelze wurde in einem, ebenfalls unter 200 mbar stehenden, Fallfilmverdampfer wieder auf 200 °C erwärmt und in einer Vorlage aufgefangen. Nach einer Verweilzeit von 20 Minuten wurde die Schmelze in die nächsten drei, gleichartig aufgebauten Stufen gepumpt. Die Bedingungen Druck, Temperatur und Verweilzeit in der 2. / 3. / 4. Stufe waren 90 / 70 / 40 mbar; 223 / 252 / 279 °C und 20 / 10 / 10 Minuten. Alle Brüden wurden über Druckregelungen in eine unter Vakuum stehende Kolonne geführt und als Kondensate abgeleitet.

Danach wurde das Oligomer in einem sich anschließenden Korbreaktor bei 280 °C und 4,7 mbar bei einer Verweilzeit von 45 Minuten zu einem höhermolekularen Produkt aufkondensiert, dessen relative Viskosität 1,195 betrug. Die Brüden wurden kondensiert.

Vom Schmelzestrom, der in einen weiteren Korbreaktor geleitet wurde, wurde mittels einer Zahnradpumpe ein Teilstrom von 150 kg/h Schmelze abgezweigt, mit 2,0 g/h 1,2,3-Propantriol-tris(4-benzolsulfonat) versetzt, über einen statischen Mischer mit einem Länge-zu-DurchmesserVerhältnis von 20 geführt und wieder in den Hauptschmelzestrom zurückgeleitet. Direkt nach dem Zusammentreffen wurde das 1,2,3-Propantriol-tris(4-benzolsulfonat) im gesamten Schmelzestrom mittels eines weiteren statischen Mischers homogen verteilt. Die so behandelte Schmelze wurde in einem weiteren Korbreaktor bei 294 °C, 0,7 mbar und bei einer mittleren Verweilzeit von 130 Minuten weiter den Prozessbedingungen ausgesetzt, ausgetragen und granuliert.

Die Herstellung der optischen Formteile (Disks) und die Messung der elektrischen Feldstärke erfolgte wie oben beschrieben. Dazu wurde das erhaltene Granulat für 6 Stunden getrocknet und dann über eine Netstal Discjet Spritzgussmaschine (siehe oben) bei einer Zykluszeit von 4,4 Sekunden unter den oben angegebenen Parametern zu Disks verarbeitet. Als Matrize wurde ein Audiostamper verwendet. Zur Stabilisierung des Prozesses wurden zunächst zwei Stunden lang Disks hergestellt und anschließend wurde von den folgenden 100 Disks jeweils die mittlere elektrische Feldstärke und die Feldstärkenvariation bestimmt.

Der Wert der mittleren elektrischen Feldstärke sowie der Feldstärkenvariation dieser 100 Disks sind in Tab. 1 angegeben.

### Gehalt phenolische OH-Gruppen: 470 ppm

Die Grenzviskosität des Polymers beträgt 36,5. Dies entspricht einem Molekulargewicht von ca. M_{w} = 19.450 g/mol.

### Beispiele 2-18 (Vergleichsbeispiele)

Es wurde wie in Beispiel 1 verfahren mit der Änderung, dass nach dem letzten Korbreaktor, d.h. dem letzten Verfahrensschritt, das Material mit verschiedenen aromatischen und aliphatischen Carbonsäuren versetzt wurde. Danach wurde abgesponnen und granuliert.

Die Herstellung der Disks und die Messung der elektrischen Feldstärke erfolgte wie oben beschrieben.

Die jeweils zugesetzten aromatischen und aliphatischen Carbonsäuren, Mengen des Zusatzes sowie die Ergebnisse der elektrischen Feldstärkenmessung und des phenolischen OH-Gehaltes wie der Grenzviskosität sind in Tab. 1 angegeben.

### Beispiel 19 (Vergleichsbeispiel)

Es wurde handelsübliches Polycarbonat hergestellt nach dem Schmelzeumesterungsverfahren der Firma General Electric verwendet (Lexan^{®} OQ1025). Die Herstellung der Disks und die Messung der elektrischen Feldstärke erfolgte wie oben beschrieben. Die Ergebnisse sind in Tab. 1 angegeben.

### Beispiele 20-25 (erfindungsgemäß)

Es wurde wie in Beispiel 1 verfahren mit der Änderung, dass nach dem letzten Korbreaktor, d.h. dem letzten Verfahrensschritt, das Material mit verschiedenen aliphatischen Hydroxydicarbonsäuren oder Hydroxypolycarbonsäuren versetzt wurde. Danach wurde abgesponnen und granuliert.

Die Herstellung der Disks und die Messung der elektrischen Feldstärke erfolgte wie oben beschrieben.

Die jeweils zugesetzten aliphatischen Hydroxydicarbonsäuren oder Hydroxypolycarbonsäuren, Mengen des Zusatzes, die Ergebnisse der Feldstärkenmessung und die die phenolischen OH-Gehalte der erhaltenen Polycarbonate sind in Tab. 2 angegeben. Die Grenzviskositäten für alle Beispiele und Vergleichsbeispiele liegen im Bereich von 35,0 bis 40,0. Dies entspricht Molekulargewichten M_{w} von 18500 bis 21750 g/mol. Die vorangehenden erfindungsgemäßen Beispiele zeigen gegenüber den Vergleichsbeispielen überraschend eine deutliche niedrigere elektrostatische Aufladung und geringe Feldstärkenvariation.

**Tab. 1 (Vergleichsbeispiele)**

| Bsp | Art des Zusatzes | Menge des | Elektrische | Variation der | Phenol. |
|---|---|---|---|---|---|
| .- | nach letztem | Zusatzes nach | Feldstärke | elektrischen | OH-Gehalt |
| Nr. | Korbreaktor | letztem Korb- | [kV/m] | Feldstärke | [ppm] |
| | | reaktor [ppm] | | [kV/m] | |
| 1 | - | - | -13 | 22 | 470 |
| 2 | 12-Hydroxy- | 50 | -41 | 36 | 550 |
| | stearinsäure | | | | |
| 3 | 12-Hydroxy- | 200 | -29 | 25 | 550 |
| | stearinsäure | | | | |
| 4 | Mandelsäure | 50 | -34 | 32 | 530 |
| 5 | Mandelsäure | 200 | -51 | 39 | 530 |
| 6 | Adipinsäure | 50 | -43 | 18 | |
| 7 | Adipinsäure | 200 | -18 | 20 | 470 |
| 8 | Milchsäure | 200 | -38 | 18 | 460 |
| 9 | Salicylsäure | 50 | +1 | 18 | 470 |
| 10 | Salicylsäure | 100 | +12 | 23 | 510 |
| 11 | Salicylsäure | 200 | +29 | 28 | 510 |
| 12 | Stearinsäure | 50 | -40 | 23 | 510 |
| 13 | Stearinsäure | 200 | -30 | 23 | 510 |
| 14 | Oxalsäure | 200 | -30 | 15 | 450 |
| 15 | Terephthalsäure | 50 | -54 | 37 | 470 |
| 16 | Terephthalsäure | 200 | -47 | 57 | 450 |
| 17 | Isophthalsäure | 50 | -49 | 39 | 520 |
| 18 | Isophthalsäure | 200 | -23 | 19 | 560 |
| 19 | Lexan^{®}OQ 1025 | - | -36 | 69 | 230 |

**Tab. 2 (erfindungsgemäße Beispiele)**

| Bsp | Art des Zusatzes | Menge des | Elektrische | Variation der | Phenol. |
|---|---|---|---|---|---|
| .- Nr. | nach letztem | Zusatzes nach | Feldstärke | elektrischen | OH-Gehalt |
| | Korbreaktor | letztem Korb- | [kV/m] | Feldstärke | [ppm] |
| | | reaktor [ppm] | | [kV/m] | |
| 20 | Weinsäure | 30 | +5 | 9 | 440 |
| 21 | Weinsäure | 50 | 0 | 8 | 440 |
| 22 | Weinsäure | 100 | 9 | 8 | 450 |
| 23 | Apfelsäure | 50 | -18 | 12 | 550 |
| 24 | Apfelsäure | 100 | -6 | 12 | 570 |
| 25 | Apfelsäure | 200 | +20 | 10 | 570 |

Im Tab. 3 und 4 sind beispielhaft die einzelnen elektrostatischen Feldmessungen für Beispiel 2 und Beispiel 21 detailliert angegeben:
Für jede Disk wurde aus den 200 pro Umdrehung erfassten Einzelwerten eine mittlere elektrische Feldstärke (Fₘᵢₜₜₑₗ) bestimmt. Des Weiteren wurde die jeweilige pro Disk ermittelte minimale Feldstärkewert (Fₘᵢₙ ) sowie der jeweilige maximale Feldstärkewert (Fₘₐₓ) ermittelt. Anschließend wurden von Fₘᵢₜₜₑₗ , Fₘᵢₙ und Fₘₐₓ die Mittelwerte für alle 100 Disks errechnet.

**Tab. 3 (Einzelergebnisse zu elektrostatischen Feldmessung zu Beispiel 2)**

| individuelle | | | | individuelle | | | |
|---|---|---|---|---|---|---|---|
| Disk- | Fₘᵢₜₜₑₗ | Fₘᵢₙ | Fₘₐₓ | Disk- | Fₘᵢₜₜₑₗ | Fₘᵢₙ | Fₘₐₓ |
| Nummer | (kV/m) | (kV/m) | (kV/m) | Nummer | (kV/m) | (kV/m) | (kV/m) |
| 1 | -43,7 | -59,5 | -21,2 | 51 | -46,8 | -63,1 | -27,4 |
| 2 | -43,7 | -60,4 | -24,5 | 52 | -24,0 | -31,1 | -17,2 |
| 3 | -38,4 | -59,7 | -20,7 | 53 | -35,5 | -56,3 | -18,2 |
| 4 | -39,0 | -55,1 | -18,5 | 54 | -40,8 | -57,5 | -24,8 |
| 5 | -45,0 | -61,2 | -22,7 | 55 | -42,4 | -61,8 | -19,3 |
| 6 | -40,5 | -57,0 | -23,6 | 56 | -38,8 | -61,7 | -25,6 |
| 7 | -41,1 | -58,5 | -24,4 | 57 | -40,5 | -58,7 | -22,0 |
| 8 | -41,0 | -57,9 | -25,2 | 58 | -42,1 | -62,7 | -27,4 |
| 9 | -41,0 | -63,5 | -28,3 | 59 | -39,8 | -57,7 | -24,3 |
| 10 | -40,9 | -62,9 | -21,0 | 60 | -45,3 | -60,7 | -27,9 |
| 11 | -39,6 | -57,0 | -23,1 | 61 | -42,2 | -56,0 | -21,7 |
| 12 | -42,6 | -60,9 | -21,4 | 62 | -37,6 | -57,8 | -19,2 |
| 13 | -37,9 | -60,7 | -18,9 | 63 | -41,2 | -61,6 | -20,9 |
| 14 | -43,0 | -57,5 | -24,7 | 64 | -34,8 | -55,1 | -18,7 |
| 15 | -41,0 | -64,4 | -27,1 | 65 | -39,6 | -58,9 | -18,4 |
| 16 | -42,4 | -58,7 | -26,1 | 66 | -41,5 | -60,4 | -20,4 |
| 17 | -42,0 | -56,5 | -23,8 | 67 | -41,5 | -60,2 | -18,7 |
| 18 | -41,4 | -60,9 | -23,0 | 68 | -43,2 | -61,6 | -25,8 |
| 19 | -42,6 | -63,4 | -20,3 | 69 | -41,1 | -58,1 | -28,7 |
| 20 | -41,2 | -60,5 | -23,4 | 70 | -43,6 | -61,0 | -20,8 |
| 21 | -47,2 | -63,0 | -23,2 | 71 | -40,2 | -61,9 | -23,2 |
| 22 | -48,2 | -62,4 | -27,2 | 72 | -40,7 | -58,4 | -22,6 |
| 23 | -41,3 | -56,8 | -23,4 | 73 | -47,1 | -61,8 | -30,1 |
| 24 | -42,2 | -63,3 | -25,7 | 74 | -42,4 | -55,7 | -23,0 |
| 25 | -41,3 | -61,4 | -19,7 | 75 | -43,4 | -58,7 | -28,5 |
| 26 | -40,0 | -58,2 | -21,1 | 76 | -39,0 | -54,0 | -18,3 |
| 27 | -40,4 | -58,3 | -20,7 | 77 | -39,7 | -53,8 | -20,2 |
| 28 | -40,7 | -63,5 | -21,5 | 78 | -23,4 | -38,9 | -14,5 |
| 29 | -42,5 | -57,5 | -23,7 | 79 | -42,1 | -60,7 | -19,0 |
| 30 | -37,6 | -59,9 | -18,8 | 80 | -43,3 | -59,5 | -27,8 |
| 31 | -40,7 | -55,9 | -22,9 | 81 | -44,8 | -61,8 | -23,0 |
| 32 | -40,0 | -60,8 | -21,4 | 82 | -42,1 | -58,9 | -21,7 |
| 33 | -35,9 | -56,6 | -21,0 | 83 | -42,3 | -58,0 | -19,7 |
| 34 | -44,8 | -54,8 | -27,9 | 84 | -40,0 | -60,0 | -17,4 |
| 35 | -41,2 | -57,2 | -24,7 | 85 | -44,9 | -57,0 | -26,2 |
| 36 | -41,9 | -61,7 | -22,3 | 86 | -44,5 | -56,3 | -24,7 |
| 37 | -40,4 | -61,9 | -20,4 | 87 | -42,3 | -58,7 | -25,7 |
| 38 | -48,1 | -60,3 | -29,0 | 88 | -33,3 | -52,3 | -17,8 |
| 39 | -38,3 | -59,4 | -16,6 | 89 | -43,9 | -59,8 | -27,6 |
| 40 | -25,2 | -38,1 | -15,5 | 90 | -39,6 | -55,8 | -23,9 |
| 41 | -39,8 | -58,0 | -21,1 | 91 | -43,4 | -63,0 | -23,3 |
| 42 | -39,2 | -60,4 | -20,0 | 92 | -40,6 | -57,2 | -19,6 |
| 43 | -40,0 | -59,0 | -21,0 | 93 | -41,9 | -61,8 | -22,8 |
| 44 | -41,4 | -61,0 | -19,6 | 94 | -42,8 | -58,8 | -25,4 |
| 45 | -38,9 | -60,0 | -20,2 | 95 | -46,1 | -63,5 | -27,2 |
| 46 | -20,8 | -27,2 | -13,8 | 96 | -43,9 | -61,4 | -22,4 |
| 47 | -39,4 | -58,3 | -18,5 | 97 | -48,8 | -61,6 | -32,4 |
| 48 | -39,7 | -60,0 | -22,3 | 98 | -42,8 | -61,3 | -22,6 |
| 49 | -41,8 | -60,5 | -23,7 | 99 | -27,1 | -36,7 | -19,0 |
| 50 | -41,3 | -61,4 | -29,3 | 100 | -45,4 | -65,8 | -20,6 |
| Mittelwert für alle 100 Disks | -40,7 | -58,3 | -22,6 | | | | |

Es ergaben sich als Mittelwerte für Fₘᵢₜₜₑₗ -40,7 kV/m (gerundet auf -41 kV/m), für Fₘᵢₙ -58,3 kV/m und für Fₘₐₓ -22,6 kV/m.Die Differenz zwischen der mittleren maximalen und mittleren minimalen elektrischen Feldstärke Fₘₐₓ und Fₘᵢₙ, die im Rahmen der Erfindung als Feldstärkenvariation bezeichnet wird, beträgt damit -22,6 - (-58,3) = 35,7 kV/m (gerundet auf 36 kV/m).

**Tab. 4 (Einzelergebnisse zu elektrostatischen Feldmessung zu Beispiel 21)**

| individuelle | | | | individuelle | | | |
|---|---|---|---|---|---|---|---|
| Disk- | Fₘᵢₜₜₑₗ | Fₘᵢₙ | Fₘₐₓ | Disk- | Fₘᵢₜₜₑₗ | Fₘᵢₙ | Fₘₐₓ |
| Nummer | (kV/m) | (kV/m) | (kV/m) | Nummer | (kV/m) | (kV/m) | (kV/m) |
| 1 | -0,3 | -5,1 | 2,9 | 51 | -1,2 | -4,7 | 2,5 |
| 2 | 0,1 | -3,2 | 2,9 | 52 | -0,2 | -7,0 | 3,5 |
| 3 | 0,3 | -4,0 | 3,7 | 53 | 0,4 | -2,5 | 2,8 |
| 4 | 1,5 | -3,5 | 4,6 | 54 | 0,5 | -3,2 | 3,2 |
| 5 | -2,0 | -5,1 | 0,7 | 55 | 1,1 | -2,7 | 3,7 |
| 6 | 0,3 | -3,8 | 4,8 | 56 | -1,6 | -10,0 | 2,2 |
| 7 | 0,5 | -4,0 | 5,2 | 57 | 1,1 | -2,7 | 3,4 |
| 8 | 0,4 | -2,9 | 4,2 | 58 | 1,7 | -3,4 | 4,4 |
| 9 | 0,6 | -5,3 | 3,6 | 59 | 1,6 | -4,3 | 4,4 |
| 10 | 1,0 | -4,3 | 3,7 | 60 | 1,2 | -3,7 | 4,5 |
| 11 | -1,2 | -5,6 | 2,2 | 61 | 1,1 | -4,5 | 4,1 |
| 12 | 0,0 | -4,6 | 2,5 | 62 | 1,2 | -10,7 | 5,1 |
| 13 | 0,9 | -4,1 | 3,8 | 63 | -0,7 | -6,0 | 2,2 |
| 14 | 0,6 | -5,3 | 3,2 | 64 | 1,1 | -3,1 | 3,3 |
| 15 | 0,2 | -4,9 | 2,9 | 65 | 1,7 | -0,3 | 3,4 |
| 16 | -0,7 | -4,2 | 2,2 | 66 | 0,7 | -8,3 | 4,3 |
| 17 | 0,6 | -3,9 | 3,9 | 67 | 1,4 | -3,6 | 4,1 |
| 18 | -0,1 | -3,7 | 2,3 | 68 | -1,1 | -10,0 | 2,6 |
| 19 | -2,5 | -8,3 | 2,0 | 69 | 0,6 | -4,0 | 3,1 |
| 20 | 0,4 | -5,1 | 4,4 | 70 | 0,5 | -3,5 | 3,6 |
| 21 | -0,1 | -4,9 | 3,8 | 71 | 0,5 | -4,5 | 3,8 |
| 22 | 0,8 | -3,8 | 3,4 | 72 | -1,0 | -4,8 | 2,6 |
| 23 | 0,9 | -3,4 | 3,1 | 73 | -1,0 | -4,4 | 1,6 |
| 24 | 0,8 | -4,3 | 3,4 | 74 | 0,4 | -4,0 | 5,4 |
| 25 | 0,7 | -6,4 | 4,9 | 75 | 0,9 | -3,6 | 4,3 |
| 26 | -0,9 | -4,9 | 2,3 | 76 | -0,8 | -5,2 | 2,7 |
| 27 | 1,2 | -4,8 | 4,0 | 77 | -1,1 | -7,4 | 2,0 |
| 28 | 0,1 | -5,0 | 4,8 | 78 | -0,3 | -6,0 | 2,7 |
| 29 | -0,7 | -4,8 | 1,7 | 79 | -0,5 | -4,7 | 2,8 |
| 30 | 0,2 | -3,5 | 2,3 | 80 | 1,5 | -3,8 | 4,1 |
| 31 | 1,3 | -4,2 | 4,0 | 81 | 1,1 | -3,2 | 4,0 |
| 32 | 0,3 | -10,0 | 5,9 | 82 | 0,6 | -4,0 | 2,8 |
| 33 | -0,5 | -3,8 | 3,0 | 83 | -0,2 | -6,6 | 4,1 |
| 34 | 0,4 | -4,4 | 3,0 | 84 | 1,3 | -3,1 | 3,5 |
| 35 | -0,9 | -7,2 | 2,4 | 85 | 1,2 | -3,4 | 3,5 |
| 36 | 0,3 | -5,3 | 3,2 | 86 | -0,7 | -9,1 | 2,4 |
| 37 | 0,2 | -3,6 | 2,7 | 87 | 1,3 | -3,4 | 4,1 |
| 38 | -2,0 | -6,4 | 2,4 | 88 | 1,2 | -3,9 | 4,4 |
| 39 | 0,0 | -4,8 | 3,4 | 89 | 1,2 | -7,5 | 4,5 |
| 40 | 0,9 | -3,0 | 3,1 | 90 | 0,8 | -3,9 | 3,3 |
| 41 | 0,9 | -3,6 | 3,5 | 91 | 1,7 | -3,6 | 4,4 |
| 42 | 0,5 | -4,1 | 4,4 | 92 | 0,0 | -4,2 | 3,7 |
| 43 | 0,6 | -4,6 | 3,6 | 93 | 0,8 | -4,2 | 4,1 |
| 44 | -1,6 | -8,1 | 2,8 | 94 | 0,7 | -3,8 | 3,9 |
| 45 | -0,2 | -4,3 | 4,7 | 95 | 1,1 | -3,9 | 3,9 |
| 46 | -0,8 | -5,6 | 2,4 | 96 | 0,0 | -2,4 | 2,6 |
| 47 | 0,7 | -4,8 | 3,3 | 97 | -1,5 | -6,2 | 2,0 |
| 48 | 0,7 | -3,7 | 3,3 | 98 | 0,7 | -4,1 | 4,4 |
| 49 | -0,8 | -4,6 | 2,0 | 99 | 1,0 | -3,8 | 4,3 |
| 50 | 0,1 | -4,3 | 2,7 | 100 | 1,2 | -4,1 | 4,4 |
| Mittelwert für alle 100 Disks | 0,3 | -4,7 | 3,4 | | | | |

Es ergaben sich als Mittelwerte für Fₘᵢₜₜₑₗ 0,3 kV/m (gerundet auf 0 kV/m), für Fₘᵢₙ -4,7 kV/m und für Fₘₐₓ 3,4 kV/m. Die Differenz zwischen der mittleren maximalen und mittleren minimalen elektrischen Feldstärke Fₘₐₓ und Fₘᵢₙ, die im Rahmen der Erfmdung als Feldstärkenvariation bezeichnet wird, beträgt damit 3,4 - (-4,7) = 8,1 kV/m (gerundet auf 8 kV/m).

## Patentansprüche

1. Verfahren zur Herstellung von Polycarbonat nach dem Schmelzeumesterungsverfahren, wobei wenigstens eine Dihydroxyarylverbindung mit wenigstens einem Diarylcarbonat unter Verwendung wenigstens eines Katalysators in einem mehrstufigen Prozess umgesetzt werden, **dadurch gekennzeichnet, dass** der Schmelze vor der letzten Reaktionsstufe wenigstens ein Inhibitor zugesetzt wird und in oder nach der letzten Reaktionsstufe eine oder mehrere aliphatische Hydroxydicarbonsäure(n) und/oder Hydroxypolycarbonsäure(n) oder deren Derivat(e) zugesetzt werden.

2. Verfahren gemäß Anspruch 1, **dadurch gekennzeichnet, dass** es sich bei der oder den aliphatischen Hydroxydicarbonsäure(n) und/oder Hydroxypolycarbonsäure(n) oder deren Derivat(en) um eine oder mehrere Verbindung(en) der allgemeinen Formel (VI) oder (VII) handelt, 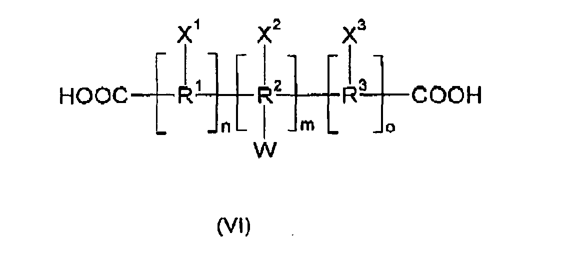 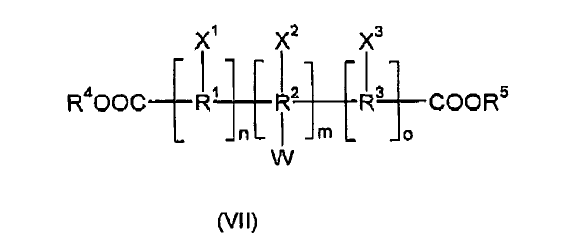 worin
R¹, R², R³ unabhängig voneinander für einen linearen oder verzweigten, vorzugsweise linearen C₁-C₁₀-Alkylenrest, besonders bevorzugt für einen linearen oder verzweigten, vorzugsweise linearen C₁-C₆- Alkylenrest stehen,
X¹, X², X³ unabhängig voneina nder für H oder OH stehen, wobei wenigstens einer der Reste X¹, X², X³ für OH steht,
W für H, COOH, ein Carboxylat oder Alkylcarbonyl-, bevorzugt für COOH steht,
n für eine ganze Zahl von 1 bis 3, bevorzugt für 1 steht,
m für 0 oder eine ganze Zahl von 1 bis 3, bevorzugt für 0 oder 1 steht,
o für 0 oder oder eine ganze Zahl von 1 bis 3, bevorzugt für 0 oder 1 steht,
R⁴, R⁵ unabhängig voneinander für einen linearen oder verzweigten C₁-C₁₀ Alkylrest, bevorzugt für einen linearen oder verzweigten C₁-C₈- Alkylrest, oder ein Alkalikation, bevorzugt Li⁺, Na⁺ oder K⁺, besonders bevorzugt für einen linearen oder verzweigten C₁-C₆- Alkylrest stehen.

3. Verfahren gemäß Anspruch 1 oder 2, **dadurch gekennzeichnet, dass** es sich bei der oder den aliphatischen Hydroxydicarbonsäure(n) und/oder Hydroxypoly-carbonsäure(n) oder deren Derivat(en) um eine oder mehrere Verbindung(en) ausgewählt aus Äpfelsäure, Äpfelsäureester, Äpfelsäurehalbester, Weinsäure, Weinsäureester, Weinsäurehalbester, Hydroxymalonsäure oder deren Ester, Zitronensäure oder deren Ester handelt.

4. Verfahren gemäß wenigstens einem der Ansprüche 1 bis 3, **dadurch gekennzeichnet, dass** es sich bei dem Inhibitor um eine schwefelhaltige Säure, einen Ester von organischen schwefelhaltigen Säuren oder Mischungen aus diesen handelt.

5. Verfahren gemäß wenigstens einem der Ansprüche 1 bis 4, **dadurch gekennzeichnet, dass** als Dihydroxyarylverbindung(en) eine oder mehrere Verbindung(en) ausgewählt aus der Gruppe der Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketane, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen eingesetzt werden.

6. Verfahren gemäß wenigstens einem der Ansprüche 1 bis 5, **dadurch gekennzeichnet, dass** als Diarylcarbonat(e) eine oder mehrere Verbindungen der allgemeinen Formel (II) 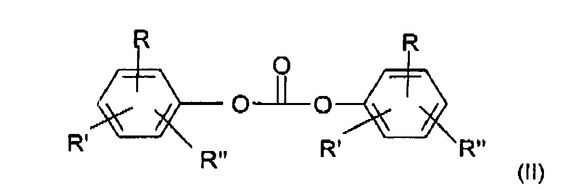 wobei
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄- Aryl stehen, R weiterhin auch -COO-R''' bedeuten kann, wobei R''' für Wasserstoff, lineares oder verzweigtes C₁-C₃₄-Alkyl, C₇-C₃₄- Alkylaryl oder C₆-C₃₄-Aryl steht,
eingesetzt werden.

7. Verfahren gemäß wenigstens einem der Ansprüche 1 bis 6, **dadurch gekennzeichnet, dass** als Katalysator(en) eine oder mehrere Verbindung(en) ausgewählt aus der Gruppe Alkali-, Erdalkali- und Oniumsalze, bevorzugt Oniumsalze eingesetzt werden.

## Claims

1. Process for the preparation of polycarbonate by the melt transesterification method, at least one dihydroxyaryl compound being reacted with at least one diarylcarbonate with the use of at least one catalyst in a multistage process, **characterized in that** at least one inhibitor is added to the melt before the last reaction stage and one or more aliphatic hydroxydicarboxylic acid(s) and/or hydroxypolycarboxylic acid(s) or a derivative or derivatives thereof are added in or after the last reaction stage.

2. Process according to Claim 1, **characterized in that** the aliphatic hydroxydicarboxylic acid(s) and/or hydroxypolycarboxylic acid(s) or the derivative(s) thereof is or are one or more compound(s) of the general formula (VI) or (VII) 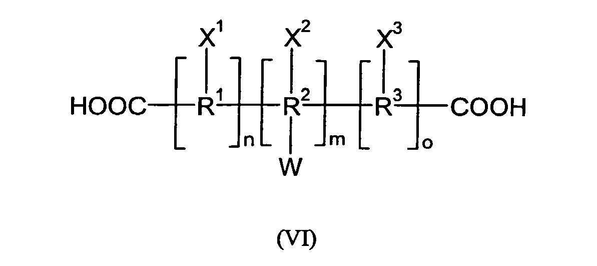 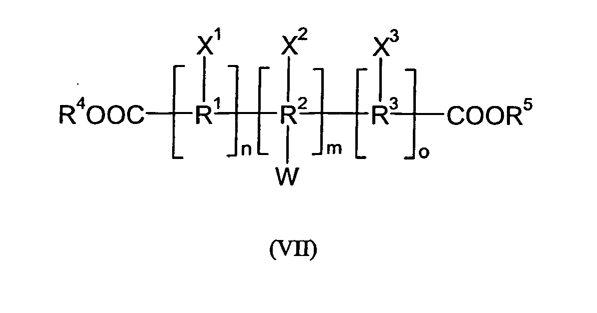 in which
R¹, R², R³, independently of one another, represent a linear or branched, preferably linear, C₁-C₁₀-alkylene radical, particularly preferably a linear or branched, preferably linear, C₁-C₆-alkylene radical,
X¹, X², X³, independently of one another, represent H or OH, at least one of the radicals X¹, X², X³ representing OH,
W represents H, COOH, a carboxylate or alkylcarboxyl, preferably COOH,
n represents an integer from 1 to 3, preferably 1,
m represents 0 or an integer from 1 to 3, preferably 0 or 1,
o represents 0 or an integer from 1 to 3, preferably 0 or 1,
R⁴, R⁵, independently of one another, represent a linear or branched C₁- C₁₀-alkyl radical, preferably a linear or branched C₁-C₆-alkyl radical, or an alkali metal cation, preferably Li⁺, Na⁺ or K⁺, particularly preferably a linear or branched C₁-C₆-alkyl radical.

3. Process according to Claim 1 or 2, **characterized in that** the aliphatic hydroxydicarboxylic acid(s) and/or hydroxypolycarboxylic acid(s) or the derivative(s) thereof is or are one or more compound(s) selected from malic acid, malic acid esters, malic acid monoesters, tartaric acid, tartaric acid esters, tartaric acid monoesters, hydroxymalonic acid or the esters thereof, citric acid or the esters thereof.

4. Process according to at least one of Claims 1 to 3, **characterized in that** the inhibitor is a sulphur-containing acid, an ester of organic sulphur-containing acids or mixtures of these.

5. Process according to at least one of Claims 1 to 4, **characterized in that** one or more compound(s) selected from the group consisting of the dihydroxybenzenes, dihydroxybiphenyls, bis(hydroxyphenyl)alkanes, bis(hydroxyphenyl)cycloalkanes, bis(hydroxyphenyl)aryls, bis(hydroxyphenyl) ethers, bis(hydroxyphenyl) ketones, bis(hydroxyphenyl) sulphides, bis(hydroxyphenyl) sulphones, bis(hydroxyphenyl) sulphoxides, 1,1'-bis(hydroxyphenyl)diisopropylbenzenes and the compounds thereof which are alkylated on the nucleus and halogenated on the nucleus are used as dihydroxyaryl compound(s).

6. Process according to at least one of Claims 1 to 5, **characterized in that** one or
more compounds of the general formula (II) 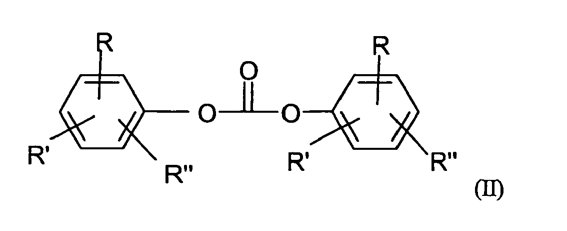 in which
R, R' and R", independently of one another, are identical or different and represent hydrogen, linear or branched C₁-C₃₄-alkyl, C₇-C₃₄- alkylaryl or C₆-C₃₄-aryl, and R may furthermore denote -COO-R''', in which R''' represents hydrogen, linear or branched C₁-C₃₄-alkyl, C₇-C₃₄-akylaryl or C₆-C₃₄-aryl,
are used as diaryl carbonate(s).

7. Process according to at least one of Claims 1 to 6, **characterized in that** one or more compound(s) selected from the group consisting of alkali metal, alkaline earth metal and onium salts, preferably onium salts, are used as catalyst(s).

## Revendications

1. Procédé pour la préparation de polycarbonate selon le procédé de transestérification en masse fondue, au moins un composé dihydroxyaryle étant transformé avec au moins un diarylcarbonate en utilisant au moins un catalyseur dans un procédé à plusieurs étapes, **caractérisé en ce que** la masse fondue est additionnée, avant la dernière étape de réaction, d'au moins un inhibiteur et, dans ou après la dernière étape de réaction, d'un ou de plusieurs acides hydroxydicarboxyliques et/ou acides hydroxypolycarboxyliques aliphatiques ou de leurs dérivés.

2. Procédé selon la revendication 1, **caractérisé en ce qu'**il s'agit, pour le ou les acides hydroxycarboxyliques et/ou hydroxypolycarboxyliques aliphatiques ou leurs dérivés d'un ou de plusieurs composés de formule générale (VI) ou (VII), 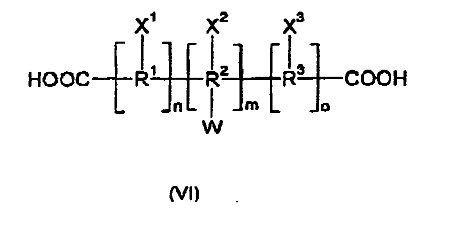 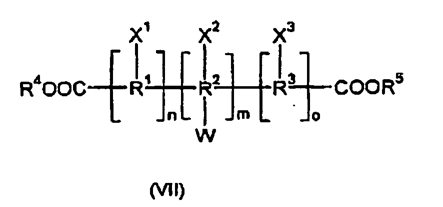 où
R¹, R², R³ représentent, indépendamment l'un de l'autre, un radical C₁-C₁₀-alkylène linéaire ou ramifié, de préférence linéaire, de manière particulièrement préférée un radical C₁-C₆-alkylène linéaire ou ramifié, de préférence linéaire,
X¹, X², X³ représentent, indépendamment l'un de l'autre,
H ou OH, où au moins un des radicaux X¹, X², X³ représente OH,
W représente H, COOH, un carboxylate ou alkylcarboxyl-, de préférence COOH,
n représente un nombre entier de 1 à 3, de préférence 1,
m représente 0 ou un nombre entier de 1 à 3, de préférence 0 à 1,
o représente 0 ou un nombre entier de 1 à 3, de préférence 0 à 1,
R⁴, R⁵ représentent, indépendamment l'un de l'autre, un radical C₁-C₁₀-alkyle linéaire ou ramifié, de préférence un radical C₁-C₆-alkyle linéaire ou ramifié, ou un cation de métal alcalin, de préférence Li⁺, Na⁺ ou K⁺, de manière particulièrement préférée un radical C₁-C₆-alkyle linéaire ou ramifié.

3. Procédé selon la revendication 1 ou 2, **caractérisé en ce qu'**il s'agit, pour le ou les acides hydroxycarboxyliques et/ou hydroxypolycarboxyliques aliphatiques ou leurs dérivés d'un ou de plusieurs composés choisis parmi l'acide malique, les esters de l'acide malique, les semi-esters de l'acide malique, l'acide tartrique, les esters de l'acide tartrique, les semi-esters de l'acide tartrique, l'acide
hydroxymalonique ou ses esters, l'acide citrique ou ses esters.

4. Procédé selon au moins l'une quelconque des revendications 1 à 3, **caractérisé en ce qu'**il s'agit, pour l'inhibiteur, d'un acide contenant du soufre, d'un ester d'acides organiques contenant du soufre ou de mélanges de ceux-ci.

5. Procédé selon au moins l'une quelconque des revendications 1 à 4, **caractérisé en ce qu'**on utilise comme composé(s) dihydroxyaryle, un ou plusieurs composés choisis dans le groupe formé par les dihydroxybenzènes, les dihydroxydiphényles, les bis-(hydroxyphényl)-alcanes, les bis-(hydroxyphényl)-cycloalcanes, les bis-(hydroxyphényl)-aryles, les bis-(hydroxyphényl)-éthers, les bis-(hydroxyphényl)-cétones, les bis-(hydroxyphényl)-sulfures, les bis-(hydroxyphényl)-sulfones, les bis-(hydroxyphényl)-sulfoxydes, les 1,1'-bis-(hydroxyphényl)-diisopropylbenzènes ainsi que leurs composés alkylés et halogénés sur le noyau.

6. Procédé selon au moins l'une quelconque des revendications 1 à 5, **caractérisé en ce qu'**on utilise comme diarylcarbonate(s) un ou plusieurs composés de formule générale (II) 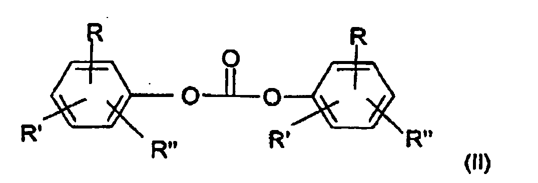 où
R, R' et R" représentent, indépendamment l'un de l'autre, en étant identiques ou différents, hydrogène, C₁-C₃₄-alkyle linéaire ou ramifié, C₇-C₃₄-alkylaryle ou C₆-C₃₄-aryle, R pouvant en outre aussi représenter -COO-R''', R''' représentant hydrogène, C₁-C₃₄-alkyle linéaire ou ramifié, C₇-C₃₄-alkylaryle ou C₆-C₃₄-aryle.

7. Procédé selon au moins l'une quelconque des revendications 1 à 6, **caractérisé en ce qu'**on utilise comme catalyseur(s) un ou plusieurs composés choisis dans le groupe des sels de métal alcalin, alcalino-terreux ou onium, de préférence des sels onium.
